# EUROPEAN PATENT APPLICATION

(11) **EP 2 495 657 A1**
(43) Date of publication of application: **05.09.2012**
(21) Application number: 11171133.9
(22) Date of filing: 23.06.2011
(51) Int. Cl.: G06F 9/50, G06F 17/30

(54) **Efficient batch processing in a multi-tier application**

(30) Priority: 03.03.2011 IN CH06362011
(71) Applicant: Tieto Oyj, 00441 Helsinki (FI)
(72) Inventor: Vaid, Sandeep, 411046 Pune (IN); Manerahimatpurkar, Avinash, 410046 Pune (IN)
(74) Representative: Kitzler, Michael

(57) **Abstract**

An aspect of the present invention provides an in-memory data structure specific to each batch to be processed in a multi-tier application, the data structure for a specific batch designed to contain the data items required for the performance of multiple units of work in the specific batch. On receiving an indication that the specific batch is to be processed, data values for the performance of a unit of work are loaded into the in-memory data structure from a database. The requests directed to the data items that are received during the performance of the unit of work are processed based on the values in the in-memory data structure. The changes made to the values are then persisted to the database after the unit of work is completed. The above process is repeated for other units of work, thereby facilitating efficient batch processing in the multi-tier application.

## Description

**Technical Field**

The present invention relates to multi-tier applications and more specifically to efficient batch processing in a multi-tier application.

**Background of the Invention**

A multi-tier application refers to a software program that is conveniently implemented as multiple tiers, with each tier providing a disparate and specific utility with appropriate interfaces for interacting with other tiers. The different tiers, executing on the same machine or on different machines connected through a network, operate together to perform specific desired tasks (in response to user requests). An example of a multi-tier application is a three-tier application having a presentation tier providing user interfaces for receiving user requests, a business logic tier implementing the general computational aspects and a data access tier providing access to data stored in a persistent storage (e.g. databases).

A multi-tier application generally performs the various tasks related to a particular business use for which the application is designed, for example, processing a payroll, facilitating an online auction, order entry, etc. Example of tasks performed in response to user requests are receiving details of an employee, providing the salary details of an employee, providing the details of various products, facilitating bidding and purchasing of a desired product, enabling tracking of the shipping status of a purchased product, etc. In general, the tasks are designed to process similar "logical records" based on the business usage, for example, employee records in a payroll application, product records in an online auction application, order records in an order entry application, etc.

Transaction processing, also known as online transaction processing (OLTP), refers to the processing of a logical record immediately in response to user inputs. Thus, in response to user inputs related to a single logical record received either as requests over a network or directly using input devices, the corresponding record is processed by the multi-tier application to generate corresponding output. The output may then be displayed or provided to the users as corresponding responses to the requests. During OLTP, many different users send independent requests (for processing various records) to the multi-tier application, and receive immediately (or in a short duration) corresponding responses. Examples of transaction processing tasks (hereafter "transactions") are the tasks noted above.

Batch processing refers to the processing of multiple records together (as a single "batch"). This is in contrast to transaction processing where each logical record is processed immediately (typically, in response to the user request), without delay of accumulating multiple records into a set/batch. The processing of each "logical record" may be viewed as a "unit of work" (or as a business transaction) to be performed by the application, with multiple units of work being performed during batch processing. The batch of records may be collected/accumulated over a period (or pre-selected either by the user or based on pre-defined criteria), and is usually presorted for sequential processing at a pre-determined time. Accordingly, processing of the batch of records may be completed without manual interaction of the users (as the batch is collected/pre-selected), while making the most efficient use of computer resources, especially processing power (since a large number amount of data/records is processed in a small duration due to the sequential processing). Examples of batch processing tasks (hereafter "batches") are updating the salaries of all the employees of an organization, identifying the number of the various products in stock, determining the winning bid for each product, etc.

Multi-tier applications are generally implemented to support both transaction and batch processing. The inventors of the subject application have noticed that there are several techniques currently available by which multi-tier applications can be implemented to support efficient transaction processing. However, there is a general need to facilitate multi-tier applications to support efficient batch processing as well.

**Related Art**

Examples of related art are found in the following publications.

The patent publication US20060010171 discloses deferred container-managed persistence operations on transactional objects. This piece of prior art is directed to persistence of server component objects until a client object program commits the transaction or until the program needs to access the server component objects.

The patent publication US20050262041 discloses a system for plain old java object (POJO) persistence. This publication is directed to retrieval and persistence of Java objects.

On the Internet website http://portal.acm.org/citation.cfm?id=1233905 there is currently disclosed an implementation of EJB3.0 persistence framework that facilitates storage and retrieval of Java objects.

The patent publication US20050262072 discloses a system for batch operation of CMP beans. This publication is directed to storing multiple instances of a CMP bean enrolled in a transaction by utilizing CMP batch operations to update multiple entries in a database table in one SQL statement only.

The patent publication US20060156313 discloses a method for implementing container managed batch jobs in an enterprise java bean environment. This publication is directed to creation and running of batch jobs in an object oriented environment.

On the Internet website http://java.sun.com/blueprints/corej2eepattems/Patterns/ SessionFacade.html there is currently disclosed various Session Facade strategies that facilitate implementation of business object as a session bean.

The patent publication US20040254947 discloses usage of cache to provide cursor isolation. This publication is directed to storing in the cache the data that is updated in a query.

On the Internet website http://portal.acm.org/citation.cfm?id=1376616.1376773 there is currently disclosed an Object/Relational Mapping (ORM) methodology for object-oriented systems to hold their long-term data safely in a database, with transactional control over it, yet have it expressed when needed in program objects.

### Object of the Invention

The general object of the invention and the problem to be solved by the invention is to provide a technical solution that enables an improved efficiency in batch processing in a multi-tier application while fulfilling a requirement of reducing the number of accesses of a persistent storage (maintaining the data required for processing a batch). The technical solution further provides efficiency in terms of time taken to retrieve the data from the persistent storage, the number of queries performed for retrieval/storage, and the specific manner in which the data required for each batch is retrieved and/or stored.

Partial problem aspects that the invention addresses comprises:
- The common business logic, business validations, business conditions has to be used for both batch processing and online transaction processing to avoid code redundancy
- Batch data access should take advantage of sequential data access in bulk for multiple units of work and modify the data in bulk to provide higher efficiency
- The design should be implementable without affecting the business logic tier, thereby enabling the design to be easily used in new as well as already implemented application having multi-tier architecture
- The technical solution should not put restrictions on the design of business logic tier. It should allow different services implemented in the business logic tier to interact with each other, such as service A invoking service B in a loop and each service B invoking service C, without any restrictions. Also solution should enable the services to interact with the various modules implemented in the data access layer.
- Code maintainability should be achieved. In other words, the software instructions forming the multi-tier application are highly maintainable (that is, instructions changed at one place (location in the software code) should not need change/testing at many other areas (portions of the software code) in the application
- Database transaction boundary (the time taken for performing a database transaction, that is, the period between the start and end of the database transaction) should be small so as to avoid database locks and increase parallelism (in particular, when batch processing is performed using multiple threads interacting with the underlying database).

This problem and its aspects are further explained below in the detailed description.

### Summary of the Invention

The object is fulfilled and the problem solved by the invention as defined in the accompanying claims in the form of a method and a system.

According to a first aspect, the invention is embodied in a method of implementing batch processing in a multi-tiered application, said method being performed in a digital processing system, said method comprising:
providing in a memory in said digital processing system, a data structure specific to a batch, wherein said data structure is designed to contain a plurality of data items required for the performance of each of a plurality of units of work comprising said batch;
receiving an indication that a corresponding batch is to be performed;
loading from a database in response to said indication that said batch is to be processed, data values corresponding to said plurality of data items into said data structure to create a first batch data set, wherein said first batch data set contains all the data required for performance of a first unit of work contained in said plurality of units of work, wherein said database is external to said digital processing system;
receiving during the performance of said first unit of work, a plurality of requests directed to said plurality of data items, wherein said plurality of requests contains a change request followed by a query request, said change request for modifying some of the data values and said query request for retrieving some of the data values;
processing said plurality of requests based on the data values in said first batch data set, wherein processing of said change request causes said first batch data set to be changed to a modified batch data set, wherein said processing of said query request is performed based on said modified batch data set;
sending the results of processing of said plurality of requests as corresponding responses to the requests; and
persisting said modified first batch data set to said database after the performance of said unit of work is complete.

Possibly, wherein said first batch data set is provided in the form of a value object, said value object also containing a plurality of methods corresponding to database operations that can be performed on said plurality of data items,
wherein each of said plurality of requests corresponds to an invocation of one of said plurality of methods,
wherein said processing each of plurality of requests comprises performing the database operation corresponding to the invoked method on the data values in said first batch data set, wherein execution of some of the database operations on the data values causes said first batch data set to be changed to said modified batch data set,
wherein said sending comprises returning each of the results of processing as a corresponding result of said invocation.

Possibly, wherein the database operations comprises a create operation, a read operation, an update operation and a delete operation.

Possibly, wherein said plurality of requests are received from a set of batch data access object (DAO) modules implemented in a data access tier of said multi-tier application, wherein each of said set of batch DAO modules implements a corresponding set of methods that are invoked from modules implemented in higher tiers of said multi-tier application,
wherein said plurality of methods implemented in said value object comprises all of said set of methods corresponding to said set of batch DAO modules,
whereby all of the database operations requested by said higher tiers of multi-tier application are enabled to be performed on said plurality of data items loaded into said data structure.

Possibly, wherein said processing further comprises generating a plurality of standard query language (SQL) statements corresponding to the change requests successfully processed in said plurality of requests,
wherein said persisting further comprises executing said plurality of SQL statements in said database after the processing of said unit of work is completed.

Possibly, wherein said executing said plurality of SQL statements is performed as a database transaction.

Possibly, further comprising, maintaining said plurality of SQL statements as an ordered list according to ascending order of time for each of said plurality of units of work, wherein said executing executes said plurality of SQL statements according to said ordered list for each of said plurality of units of work.

Possibly, wherein said loading further loads data values from said database to create a plurality of batch data sets corresponding to a subset of said plurality of units of work, said plurality of batch data sets including said first batch data set, said method further comprising:
receiving from a first batch DAO module of said set of batch DAO modules, a first request for an active instance whose data items are being processed during the execution of said first unit of work; and
sending a corresponding first response to said first request indicating that said first batch data set is said active instance,
wherein said plurality of requests directed to data items in said first batch data set are received after said first batch data set is indicated as said active instance.

Possibly, wherein said loading loads from said database, data values for creating batch data sets corresponding to all of said plurality of units of work before said receiving receives any of said plurality of requests.

Possibly, wherein the processing of said batch is performed using a plurality of threads, each thread performing the processing of a number of units of work requiring a corresponding subset of said plurality of batch data sets,
wherein a first thread requires a first subset of batch data sets and a second thread requires a second subset of batch data sets, said plurality of threads comprising said first thread and second thread and said plurality of batch data sets comprising said first subset of batch data sets and said second subset of batch data sets,
wherein said providing further comprises restricting said first thread to access only said first subset of batch data sets and said second thread to access only said second subset of batch data sets.

Possibly, wherein said restricting is performed by defining said first subset of batch data sets as a thread local object of said first thread and said second subset of batch data sets as a thread local object of said second thread.

According to a second aspect, the invention is embodied in a system for implementing batch processing in a multi-tiered application, comprising:
at least one processor;
at least one memory;
at least one scheduler;
at least one storage device having stored thereon instructions that, when loaded into said at least one memory and executed by said at least one processor, causes said at least one processor to:
   provide in said at least one memory, a data structure specific to a batch, wherein said data structure is designed to contain a plurality of data items required for the performance of each of a plurality of units of work comprising said batch;
   receiving from said scheduler an indication that a corresponding batch is to be performed;
   load from a database in response to said indication that said batch is to be processed, data values corresponding to said plurality of data items into said data structure to create a first batch data set, wherein said first batch data set contains all the data required for performance of a first unit of work contained in said plurality of units of work, wherein said database is external to said system;
   receive during the performance of said first unit of work, a plurality of requests directed to said plurality of data items, wherein said plurality of requests contains a change request followed by a query request, said change request for modifying some of the data values and said query request for retrieving some of the data values;
   process said plurality of requests based on the data values in said first batch data set, wherein processing of said change request causes said first batch data set to be changed to a modified batch data set, wherein said processing of said query request is performed based on said modified batch data set;
   send the results of processing of said plurality of requests as corresponding responses to the requests; and
   persist said modified first batch data set to said database after the performance of said unit of work is complete.

Possibly, wherein said first batch data set is provided in the form of a value object, said value object also containing a plurality of methods corresponding to database operations that can be performed on said plurality of data items,
wherein each of said plurality of requests corresponds to an invocation of one of said plurality of methods,
wherein said at least one processor processes each of plurality of requests by performing the database operation corresponding to the invoked method on the data values in said first batch data set, wherein execution of some of the database operations on the data values causes said first batch data set to be changed to said modified batch data set,
wherein said at least one processor sends each of the results of processing as a corresponding result of said invocation.

Possibly, wherein said at least one processor generates a plurality of standard query language (SQL) statements corresponding to the change requests successfully processed in said plurality of requests,
wherein said at least one processor persists the changes by executing said plurality of SQL statements in said database after the processing of said unit of work is completed.

Possibly, wherein said at least one processor processes loads data values from said database to create a plurality of batch data sets corresponding to a subset of said plurality of units of work, said plurality of batch data sets including said first batch data set,
wherein said at least one processor processes said batch using a plurality of threads, each thread performing the processing of a number of units of work requiring a corresponding subset of said plurality of batch data sets,
wherein a first thread requires a first subset of batch data sets and a second thread requires a second subset of batch data sets, said plurality of threads comprising said first thread and second thread and said plurality of batch data sets comprising said first subset of batch data sets and said second subset of batch data sets,
wherein said at least one processor restricts said first thread to access only said first subset of batch data sets and said second thread to access only said second subset of batch data sets.

These aspects of the present invention facilitate in different respects efficient batch processing in a multi-tier application as described in more detail below with examples.

### Brief Description of the Drawings

Example embodiments of the present invention will be described with reference to the accompanying drawings briefly described below.

Figure 1 is a block diagram illustrating an example environment (computing system) in which several aspects of the present invention can be implemented.

Figure 2 is a block diagram illustrating the manner in which a multi-tier application is implemented in one embodiment.

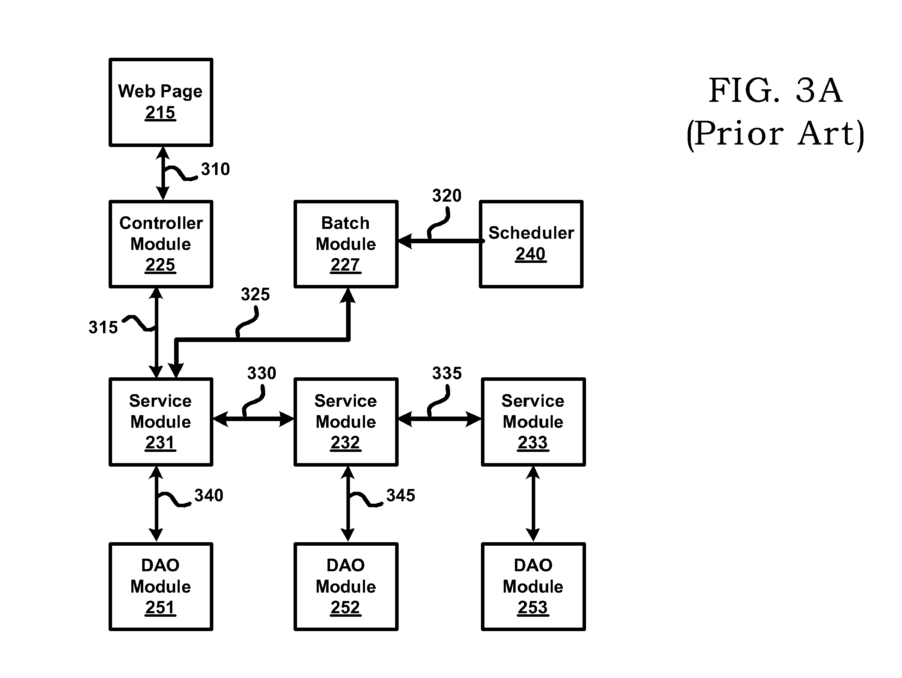

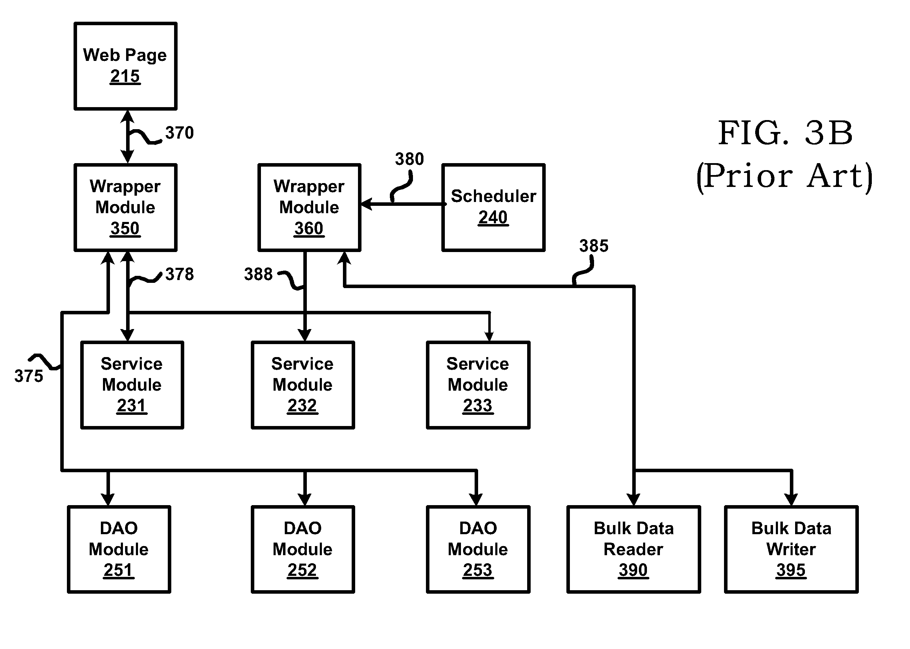

Each of Figures 3A and 3B is a block diagrams illustrating the manner in which a multi-tier application is implemented in the prior art with shared service and separate DAO.

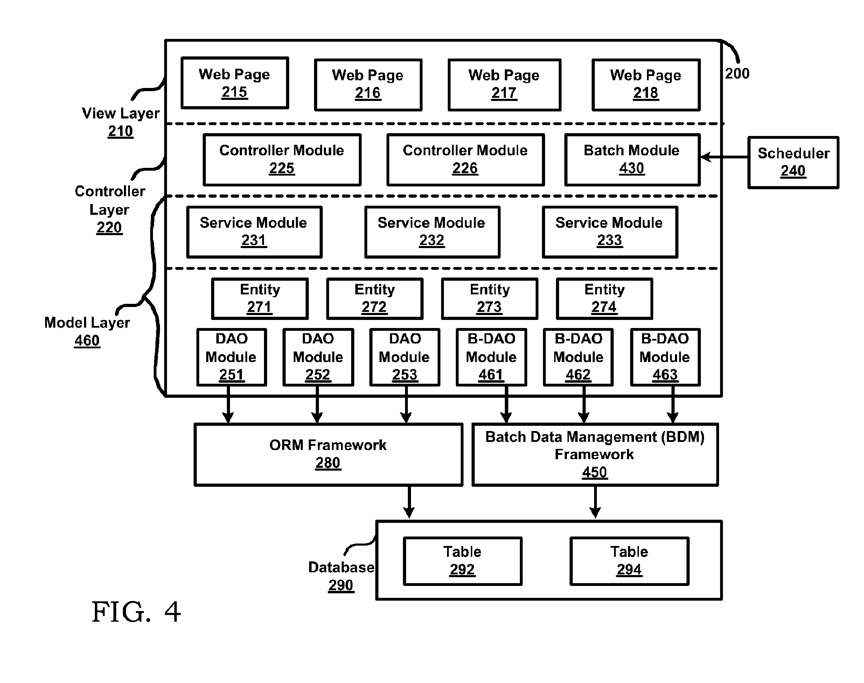

Figure 4 is a block diagram illustrating the manner in which a multi-tier application is implemented according to several aspects of the present invention.

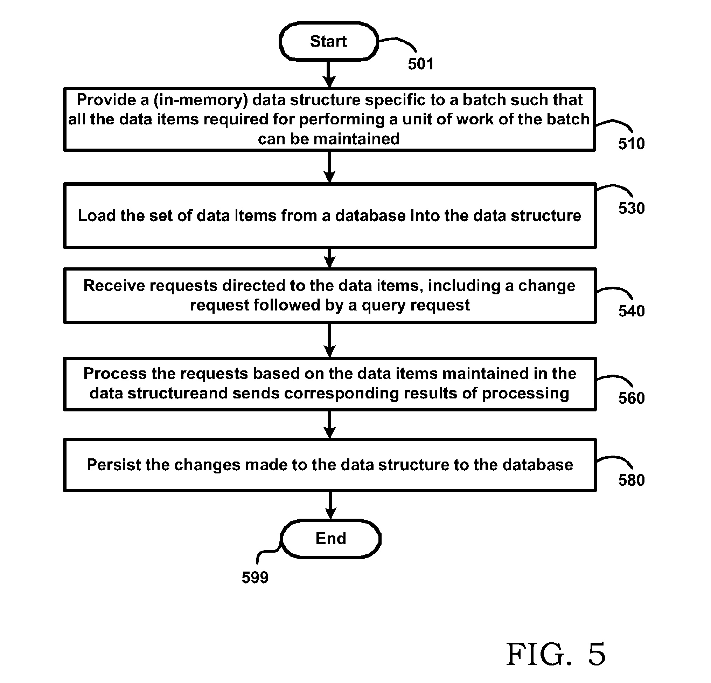

Figure 5 is a flowchart illustrating the manner in which a multi-tier application is executed in the batch mode according to an aspect of the invention.

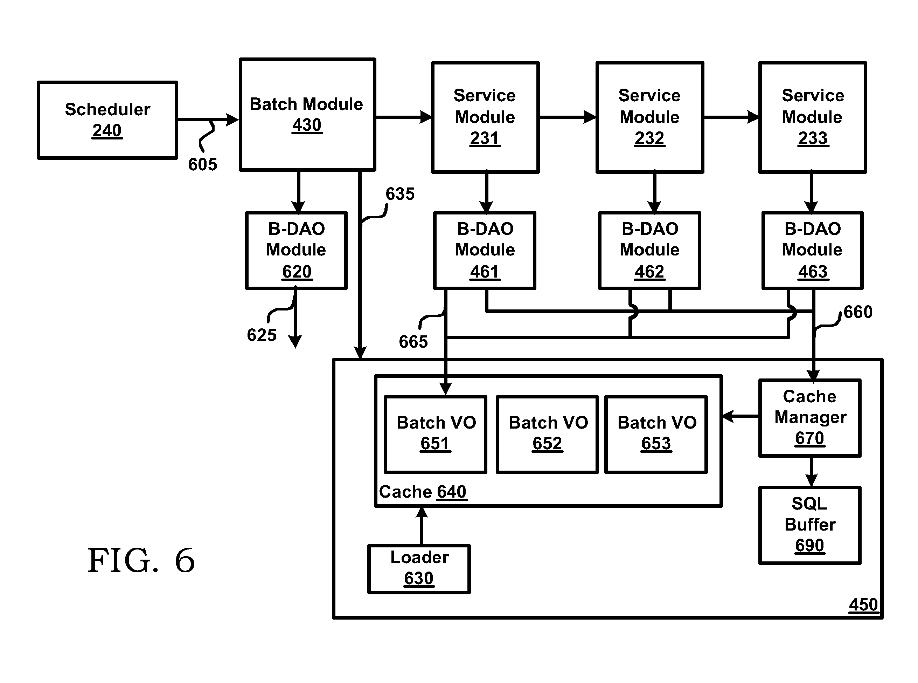

Figure 6 is a block diagram illustrating the detailed implementation of multi-tier application according to several aspects of the present invention.

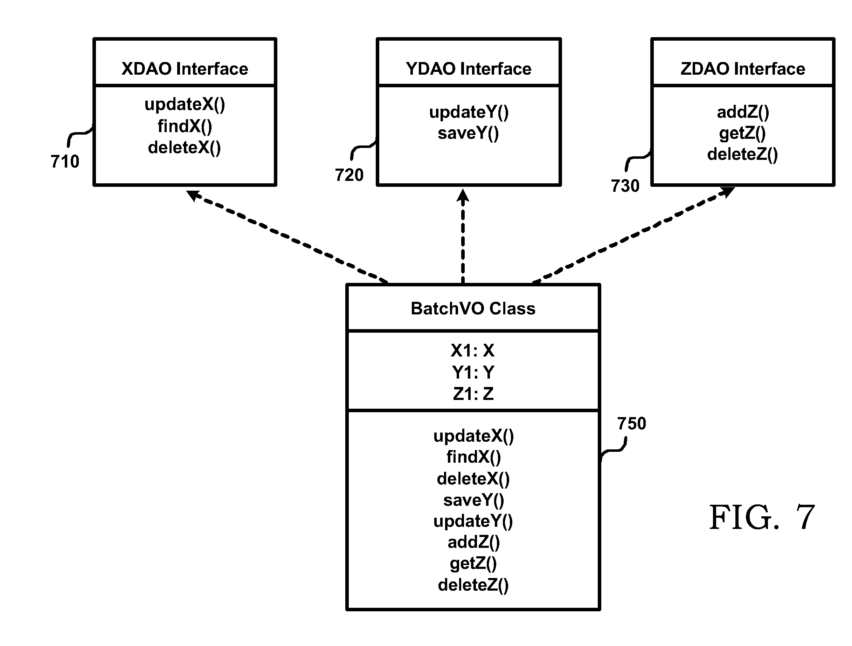

Figure 7 is a block diagram illustrating an example BatchVO object.

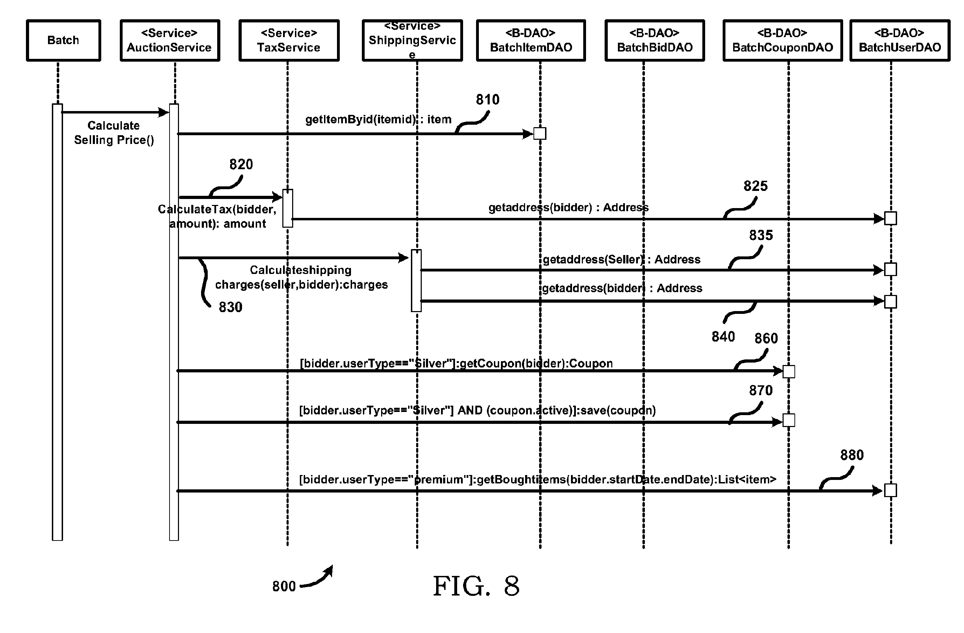

Figure 8 is a flow diagram describing an example hypothetical enterprise application.

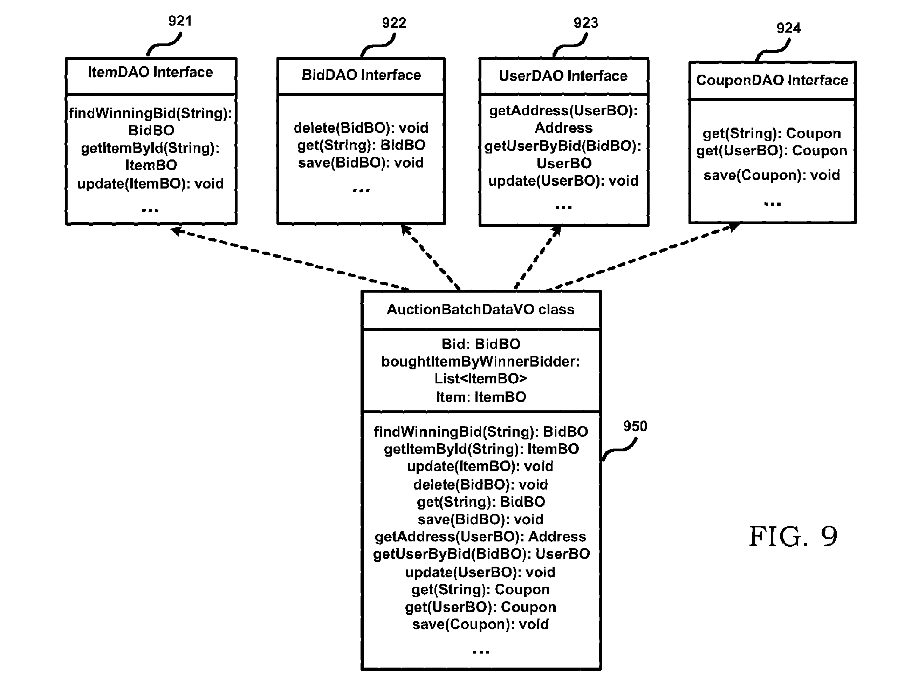

Figure 9 is an example AuctionBatchDataVO object according to the example enterprise application.

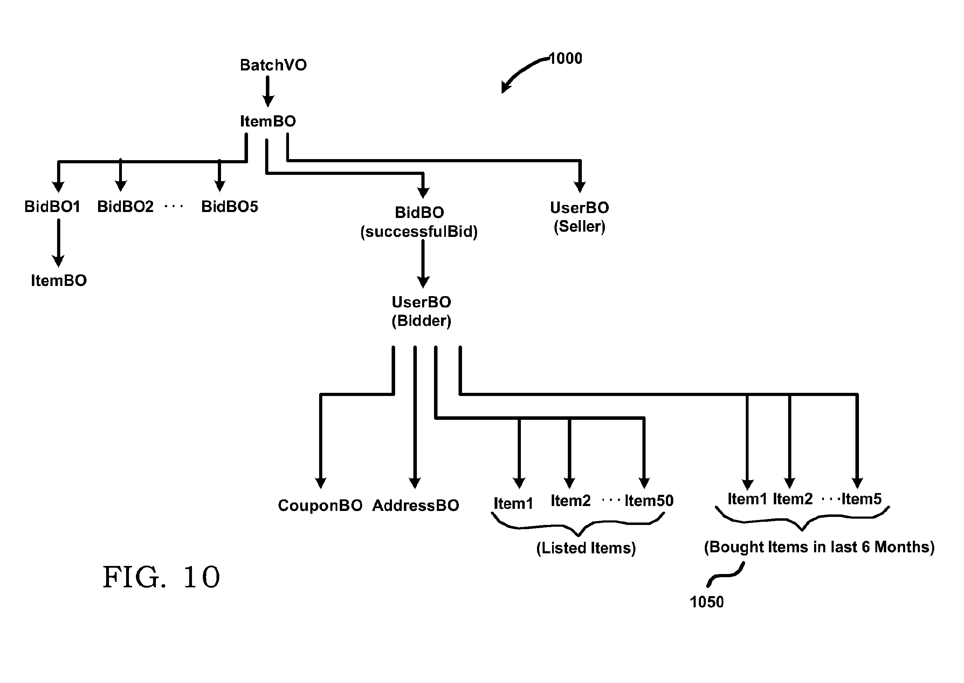

Figure 10 is an object hierarchy diagram describing the data structure implementation of BatchVO object.

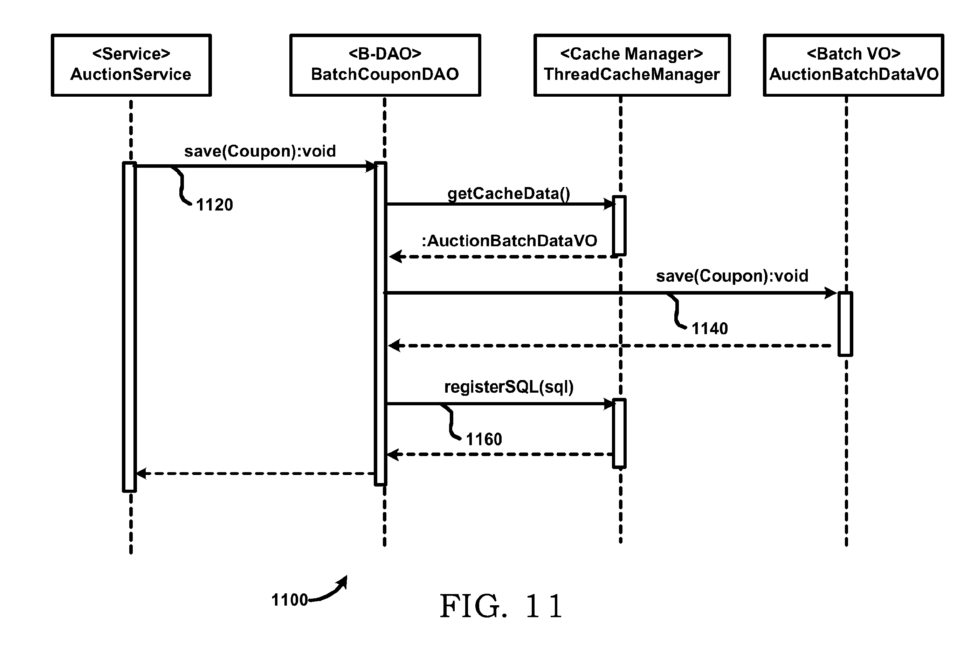

Figure 11 is a flow diagram illustrating the interaction between various modules of example enterprise application.

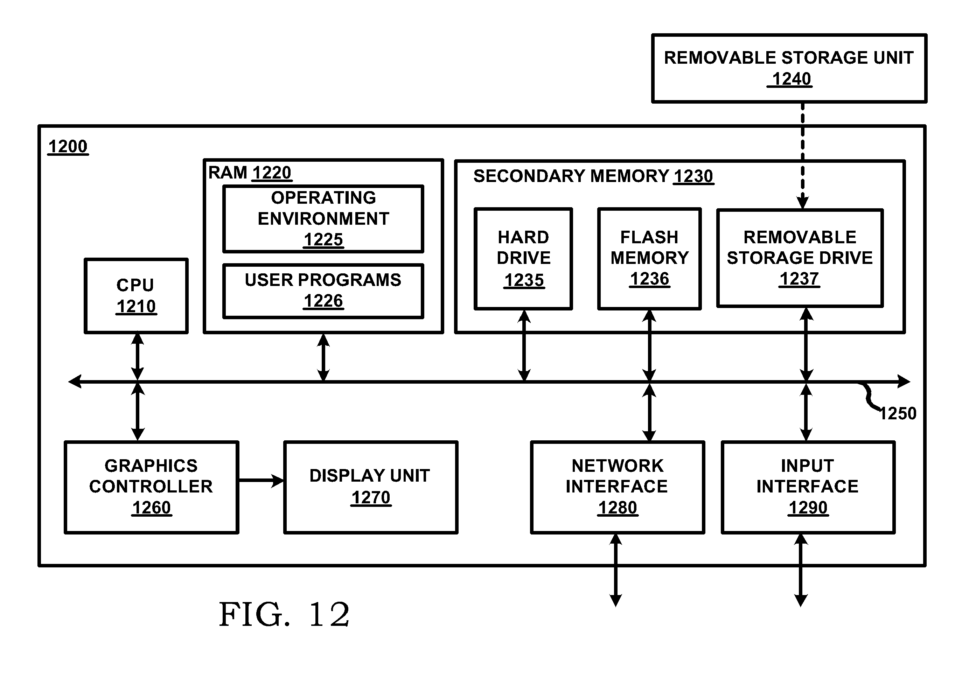

Figure 12 is a block diagram illustrating the details of a digital processing system in which various aspects of the present invention are operative by execution of appropriate executable modules.

In the drawings, like reference numbers generally indicate identical, functionally similar, and/or structurally similar elements. The drawing in which an element first appears is indicated by the leftmost digit(s) in the corresponding reference number.

It should be understood that the figures and/or screen shots illustrated in the attachments highlighting the functionality and advantages of the present invention are presented for example purposes only. The present invention is sufficiently flexible and configurable, such that it may be utilized in ways other than that shown in the accompanying figures.

### Detailed Description of the Invention

**1. Introduction**

As stated above, the present invention aims at providing a technical solution that enables an improved efficiency in batch processing in a multi-tier application while fulfilling a requirement of reducing the number of accesses of a persistent storage (maintaining the data required for processing a batch). This is achieved by the methods and systems of the present invention, discussed in detail below.

Several aspects of the present invention are described below with reference to examples for illustration. However, one skilled in the relevant art will recognize that the invention can be practiced without one or more of the specific details or with other methods, components, materials and so forth. In other instances, well-known structures, materials, or operations are not shown in detail to avoid obscuring the features of the invention. Furthermore, the features/aspects described can be practiced in various combinations, though only some of the combinations are described herein for conciseness.

2. **Example Environment**

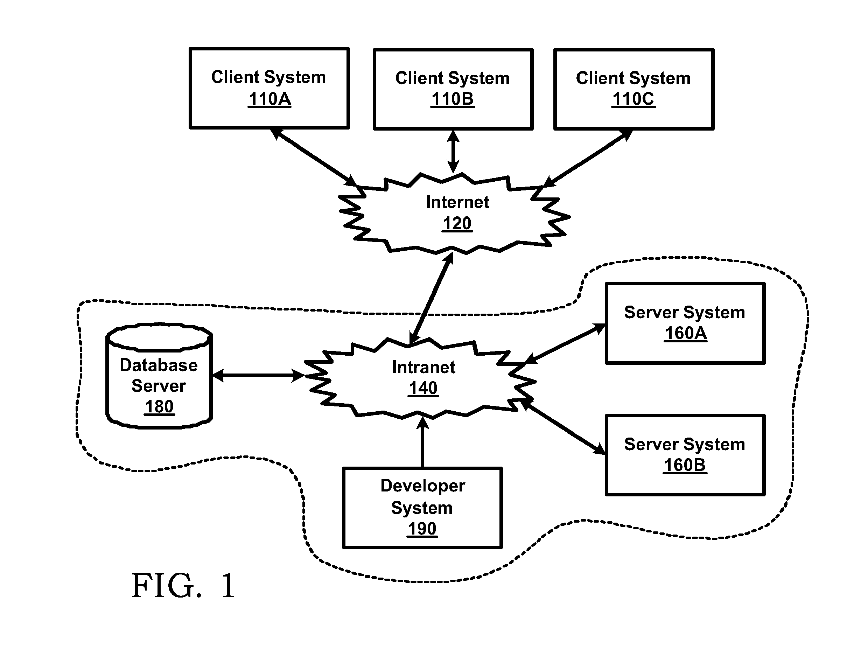

Figure 1 is a block diagram illustrating an example environment (computing system) in which several aspects of the present invention can be implemented. The block diagram shows client systems 110A-110C, Internet 120, intranet 140, server systems 160A-160B, database server 180 and developer system 190.

Merely for illustration, only representative number/type of systems is shown in the Figure. Many environments often contain many more systems, both in number and type, depending on the purpose for which the environment is designed. Each system/device of Figure 1 is described below in further detail.

Intranet 140 provides connectivity between server systems 160A-160B, database server 180 and developer system 190, all provided within an enterprise (shown with the dotted boundary). Internet 120 extends the connectivity of these (and other systems of the enterprise) with external systems such as client systems 110A-110C. Each of intranet 140 and Internet 120 may be implemented using protocols such as Transmission Control Protocol (TCP) and/or Internet Protocol (IP), well known in the relevant arts.

In general, in TCP/IP environments, a TCP/IP packet is used as a basic unit of transport, with the source address being set to the TCP/IP address assigned to the source system from which the packet originates and the destination address set to the TCP/IP address of the target system to which the packet is to be eventually delivered. An IP packet is said to be directed to a target system when the destination IP address of the packet is set to the IP address of the target system, such that the packet is eventually delivered to the target system by intranet 140 and Internet 120.

Each of client systems 110A-110C represents a system such as a personal computer, workstation, mobile station, etc., being provided with specifically designed software adapted to be used by users to generate client requests to enterprise applications executing in server systems 160A-160B. The requests may be generated using appropriate user interfaces. In general, a client system sends requests to an enterprise application, i.e. application software, for performing desired tasks and receives corresponding responses containing the results of performance of the requested tasks.

Database server 180 represents a non-volatile storage facilitating storage and retrieval of a collection of data by one or more enterprise applications executing in server systems 160A-160B (typically while processing various client requests). In one embodiment, database server 180 is implemented using relational database technologies and therefore provides storage and retrieval of data using structured queries such as SQL (Structured Query Language). SQL refers to a special-purpose, generally non-procedural language that supports the definition, manipulation, and control of data in systems implementing relational database technologies.

Each of server systems 160A-160B represents a server, such as a web/application server, executing enterprise applications capable of performing tasks requested by users using one of client systems 110A-110C. An enterprise application may perform the tasks on data maintained internally or on external data (e.g. stored in database server 180) and then send the result of performance of the tasks to the requesting client system. Each of server systems 160A-160B may also contain other software programs such as operating system, device drivers, etc., (not shown) that provides a (common) run time environment facilitating the execution of the enterprise applications.

As noted above, server systems 160A-160B, database server 180 (together with intranet 140 providing connectivity among the systems) may be implemented in a single "enterprise". In general, the combined systems/servers (excluding the network, which merely provides data transport) shown within the dotted area may be executing a multi-tier enterprise application with the various tiers of the enterprise application being executed on the various systems. Having such multiple tiers generally enables different tiers to be designed/developed by different groups of developers/vendors, etc., and also simplifies maintenance of the software program/ application.

Developer system 190 enables developers/users to implement the desired multi-tier enterprise applications. The implemented multi-tier application may then be deployed on one or more of systems in the enterprise (such as server systems 160A-160B and/or database server 180) for execution. The manner in which a multi-tier application may be implemented (by developers using developer system 190) is described below with examples.

3. **Implementing a Multi-Tier Application**

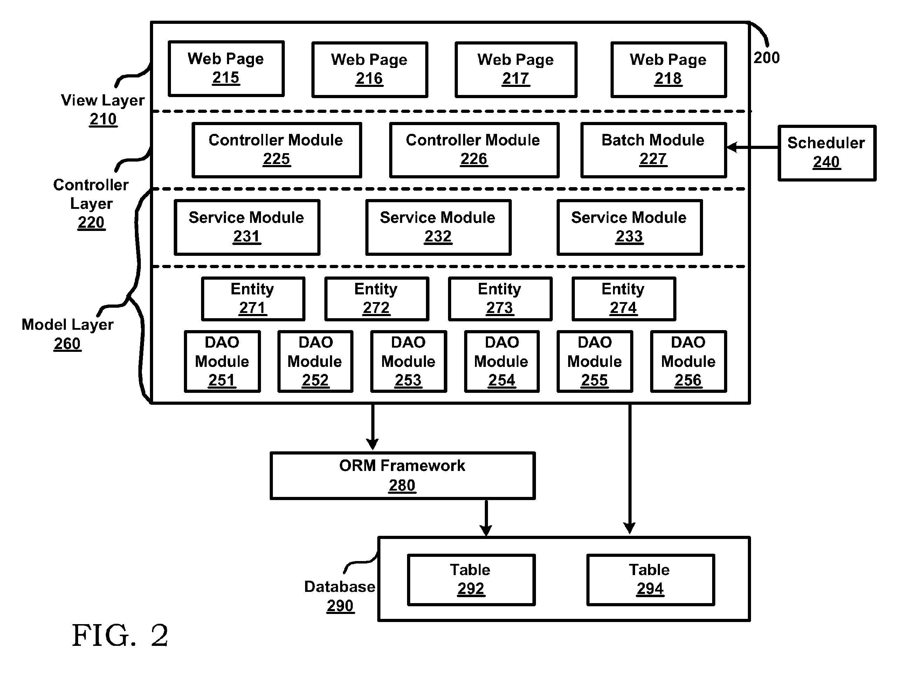

Figure 2 is a block diagram illustrating the manner in which a multi-tier application (200) is implemented in one embodiment. The description is continued by an example assuming that application 200 is implemented in Java[TM] programming environment (available from Oracle Corporation) according to Model View Controller (MVC) architecture, which facilitates applications to be developed in multiple tiers.

However, the features of the present invention may be implemented for other multi-tier applications implemented in other programming environments (such as .NET[TM] framework available from Microsoft Corporation) and/or according to other architectures facilitating applications to be developed in multiple tiers as will be apparent to one skilled in the relevant arts by reading the disclosure provided herein.

Application 200 is shown containing view layer 210, controller layer 220 and model layer 260. View layer 210 is shown containing software modules that provide the user interface of the application, while controller layer 220 is shown containing software modules that control the flow of the application. Model layer 260 is shown containing software/service modules that implement the general computational aspects (business logic) of the application, software/data access object (DAO) modules that provide access to data stored in a persistent storage (such as database server 180), and entity modules that provide an abstract model for the underlying data.

Accordingly, application 200 may be viewed as a four-tier application, with view layer 210 representing a presentation tier, controller layer 220 representing a controller tier, the service modules in model layer 260 representing a business logic tier and the entity and DAO modules in model layer 260 representing the data access tier. The different layers/tiers may be deployed and executed on any of the systems in the enterprise. For example, view layer 210 may be deployed and executed in server system 160A (a web server), controller layer 220 and the service modules of model layer 260 may be deployed and executed in server system 160B (an application server), while the entity and DAO modules of model layer 260 may be deployed and executed in server system 160B (or in an another application server not shown in Figure 1).

Some of the modules executed during online transaction processing are first described below, followed by the specific modules executed during batch processing.

View layer 210 (providing the user interface of application 200) is shown containing web pages 215-218, each of which provides a corresponding portion of the user interface and is accessible using a corresponding Uniform Resource Locator (URL). Web pages 215-218 may be implemented using one or more of hypertext markup language (HTML), Java server pages (JSP), Java Server Faces (JSF), etc. In an alternative embodiment, the user interface may be implemented using Java components such as Swing, and/or extensible markup language (XML).

Controller layer 220 is shown containing software/controller modules 225-226 which controls the flow of the application. Each of controller modules 225-226 (executed during online transaction processing) contains software instructions and/or data implemented according to a desired manner of presenting the web pages in view layer 210, i.e. computer program code portions that are devised to control the data processing unit inter alia to present web pages in the view layer in a certain manner. The desired manner may include the specific web pages to be displayed when links in another web page are clicked/ selected by the user, the page to be displayed when errors occur during execution/user interaction, etc. Controller modules 225-226 may be implemented as Java servlets, Apache Jakarta Struts controllers, JSF (Java Server Faces) controllers, etc.

Thus, the web pages in view layer 210 and the controller modules in controller layer 220 operate together to facilitate users using client systems 110A-110C to interact with application 200. In particular, application 200 may receive client requests (from users using client systems 110A-110C) containing URLs for desired web pages, perform pre-defined tasks associated with the requested web pages, and sends the requested web pages (generated as or containing the result of the performance of the pre-defined tasks) to the requesting client system. The web pages may then be displayed by a browser on a display unit (not shown in Figure 1) associated with the requesting client system.

It may be appreciated that the interactions between the user and application 200 (noted above) may form the basis for performing various business transactions related to the particular business use for which application 200 is designed. In general, each transaction may be viewed as performing a sequence of pre-defined tasks (business operations) in response to user inputs (provided by the users using the web pages). Application 200 may accordingly be implemented to support processing of such transactions.

In one embodiment, the interactions between the system and a user are implemented in the controller modules of controller layer 220, while the processing associated with the interactions in particular, the pre-defined tasks (business operations) are implemented as corresponding service modules (containing software instructions according to Java programming language) in model layer 260.

Thus, each of service modules 231-233 shown in model layer 260 is designed and controlled to perform the computations associated with a pre-defined task/business operation of application 200. Each of service modules 231-233 may accordingly contain business logic, business validations, business conditions, etc. required for the implementation of a corresponding business operation. As part of such processing/computations/validations, each service module may also be designed to retrieve/store a corresponding data set based on the business operation implemented.

Accordingly, model layer 260 is also shown containing data access object (DAO) modules (such as 251-256) and entity modules (271-274), which together provide access (retrieval/storage) to data in tables 292 and 294of database 290 (maintained in database server 180). The modules of model layer 260 are implemented consistent with the underlying storage type/mechanism, type of services used to access the underlying data, etc. Higher level tiers (such as the business logic tier containing service modules 231-233) are typically designed to access the data using the modules of model layer 260, thereby enabling the data access functionality in the higher level tiers to be implemented independent of the underlying storage technique/mechanism.

Each of DAO modules 251-256 represents a module designed and controlled to provide access to specific data sets (for example, the data related to an employee). In general, each DAO module implements various database operations such as create, read (or find by criteria), update, and delete operations (commonly referred to as CRUD operations in relational database technologies) for a specific data set. The database operations may be performed by executing corresponding SQL queries in relational database technologies, as will be apparent to one skilled in the relevant arts.

In general, the database operations performed in DAO modules result in loading/storing the data in entity modules 271-274. The entity modules are commonly defined to correspond to rows in tables (such as 292 or 294), with each entity module having attributes corresponding to the columns in a table and associated attribute values representing the data values stored in the columns for a corresponding row in the table. Thus, rows in a single table (e.g. 292) may be represented as multiple instances of the same entity module, while rows in different tables may be represented as instances of different entity modules.

Each entity module may also contain subroutines for performing various actions (add, update, delete, etc.) on the data maintained in the entity module, and accordingly simplifies the manipulation of the data values stored in the corresponding row/table. Alternatively, the entity modules may be implemented (for example, as Java Beans[TM]) to merely store the data, and the manipulation of the attribute values may be performed directly by service modules (231-233).

According to object oriented programming paradigm, each entity module may be viewed as having a corresponding "object type" (for example, referred to as "classes" in Java programming environments) that specifies the collection of attributes and subroutines/methods which capture the states and/or behaviors of an entity (in a real/virtual world) and one or more "objects" (referred to as "instances" in Java programming environments) that represent the specific association of data with the attributes/methods of the object type. It may be appreciated that each object type/class may contain objects of other object types/classes and accordingly form a hierarchy of objects/object types. Such architecture may be provided by interfacing with a persistence framework such as ORM framework 280.

Object Relational Mapping (ORM) framework 280 facilitates storage and retrieval of data in the form of objects such as entity modules, in particular, when the underlying database 290 is implemented in the form of tables (292 and 294) containing columns according to relational database technologies. ORM framework 280 generally facilitates conversion of data in the form of object types/objects/attributes from/to data in the form of tables/rows/columns. ORM framework 280 is typically shared by multiple applications, and is accordingly shown external to application 200. An example ORM framework is Open Source Hibernate framework available from JBoss Community.

Some of the DAO modules 251-256 may be implemented to access the data in database 290 using ORM framework 280, while the other DAO modules may be implemented using technologies such as JDBC (such as Java Database Connectivity) that provide more direct access (as compared to persistence frameworks such as ORM framework 280) to the data values maintained in database 290.

Thus, on receiving requests for performing interactions (forming part of a transaction) with web pages in view layer 210, corresponding controller modules (capturing the requested interaction) in controller layer 220 are invoked, which in turn may invoke one or more service modules in model layer 260 for performing computations associated with the requested interaction. The service modules may in turn invoke other service modules (based on the business operations to be performed) or underlying DAO modules in model layer 260 for accessing the desired data (entity modules) required for the transaction. The service modules then perform the associated computations (representing the business operations forming part of the transaction) and the controller module then provides the results to the user (using the same or different web pages).

Accordingly, the modules in view layer 210, controller layer 220 and model layer 260 operate together to support transaction processing in multi-tier application 200. It may be appreciated that application 200 may also be required to support batch processing. The modules of application 200 that may be executed during batch processing are described below with examples.

**4. Supporting Batch Processing**

In one embodiment, a developer (using developer system 190) specifies the sequence of business operations to be performed as part of a desired batch, while an administrator of the application (after deployment) specifies the specific data sets (records) on which the sequence is to be performed and a date/time at which the processing/execution of the batch is to be started/triggered. The administrator may similarly specify the details of other batches sought to be processed/executed by application 200.

The description is continued assuming that only such date/time triggered batch processing is supported by application 200. However, in alternative embodiment, batches may be specified to be triggered based on other conditions such as the occurrence of a specific fault, the receipt of a specific client request, etc. as well. Furthermore, the batches may also be specified by users or administrator using appropriate user interfaces/web pages provided (in client systems 110A-110C or server systems 160A-160B) by application 200.

Scheduler 240 represents a software module that is designed and controlled to receive the details of the various date/time triggered batches specified by an administrator of the application and maintains the received details in a secondary/persistent storage such as a hard disk (not shown). Scheduler 240 is also designed to track a current date/time, identify whether any of the maintained batches are to be started at the current date/time and to start processing/execution of the identified batches (if any). Scheduler 240 is generally shared among multiple applications and accordingly shown external to application 200. Scheduler 240 is typically implemented to execute independent of the state of execution of application 200, for example as a background process, and to start execution of application 200 if the application is not in the executing state (unable to receive client requests and/or process transactions). Examples of scheduler applications are Quartz scheduler available from Terrcotta Inc, Windows Task Scheduler available from Microsoft Corporation.

The starting of processing of a batch may entail scheduler 240 invoking a specific batch module (such as 227) corresponding to the batch. Each of the batch modules (though only one is shown in Figure 2) implemented in the controller layer 220 of application 200, represents a module designed and controlled to start processing of a corresponding batch (as specified by the developer and administrator of the application). In response to receiving an indication from scheduler 240, each batch module (such as 227) invokes the various service modules corresponding to the business operations specified as part of the batch.

It may be appreciated that batch processing may be made more efficient by providing service modules that are dedicated for each batch. However, such an approach requires that the business logic, business validations, business conditions, etc. contained in the service modules (used for transaction processing) be duplicated in the batch specific service modules. Such duplication may result in the software instructions forming the business logic tier to have low maintainability (since changing of one business logic/validation requires modification/testing of multiple service modules). In one embodiment (assumed to be implemented in the below description), duplication at the business logic tier is avoided by using the same service modules (such as 231-233) for both transaction and business processing.

Thus, during batch processing, scheduler 240 identifies that a specific batch is to be processed, and invokes the corresponding batch module (such as 227) in controller layer 220, which in turn invokes one (or more) service modules in model layer 260 for performing computations associated with the corresponding business operations (specified in the batch). Each of the service modules may in turn invoke other service modules (based on the business operations to be performed) or underlying DAO modules in model layer 260 for accessing the desired data sets required for the batch. The service modules then perform the associated computations (representing the business operations forming part of the transaction) and then store the corresponding results (for example, in database 290) for later retrieval. A user/administrator may later access the (stored) results of the batch processing using appropriate user interfaces/web pages provided by application 200.

Accordingly, the modules of the different tiers of the application operate together to support batch processing in multi-tier application 200. The number/type of modules in the different layers/tiers of the multi-tier application may be implemented consistent with supporting the various batches sought to be performed by application 200. The manner in which the modules in the different layers/tiers of application are implemented for supporting batch processing according to prior approaches is described below with examples.

**5. Prior Approaches**

Each of Figures 3A and 3B is a block diagram illustrating the manner in which different tiers/layers of a multi-tier application (200) are implemented to support batch processing in a corresponding embodiment. The different approaches to batch processing are described below with respect to the modules present in Figure 2, and accordingly the description of the modules is not repeated again for conciseness. Each of the Figures is described in detail below.

Figure 3A depicts a prior approach in which the same service modules and DAO modules implemented in model layer 260 are invoked during both transaction and batch processing. In one embodiment, each service module invokes a corresponding same DAO module, irrespective of whether a transaction or batch processing is being performed.

In response to receiving an indication (along path 310) from web page 215, controller module 225 is shown invoking service module 231 (path 315) for performing a business operation as part of a transaction (during OLTP). Service module 231 may in turn invoke DAO modules such as DAO module 251 (path 340) to access specific data sets (for example, the data related to an employee or an product) from database 290. Service module 231 may also invoke other service modules such as service module 232 (as indicated by path 330) to execute the corresponding business operation as part of the transaction, which in turn may invoke service module 233 (as indicated by path 335). Service module 232 may also invoke DAO module 252 for accessing data sets required for the transaction (path 345).

Though not shown, the service modules may invoke multiple (different) DAO modules as well, for example, service module 232 may invoke both of DAO modules 232 and 233, as may be appreciated by one skilled in the relevant arts. The service modules may interact (on paths 340 and 345) with the different DAO modules by sending/receiving one or more instances of entity modules 271-274 based on the specific data sets required for the transaction. The DAO modules may store/retrieve the data sets from database 290 either directly (for example, using JDBC) or through ORM framework 280.

The service modules 231-233 operate together to generate an output of the transaction based on the inputs received from the user using in web page 215 and the data sets retrieved from database 290. The generated output may be displayed to the user as part of web page 215 or as part of another web page (not shown). Thus, a business transaction containing a pre-defined sequence of business operations is processed by application 200 during OLTP.

It may be appreciated that for clarity, only a single sequence of service modules (231-233) are shown to be invoked. In a typical implementation, each of the service modules may invoke multiple service modules (that may be executing in parallel) during its execution, with each of the invoked service modules further invoking multiple other service modules (again, maybe executed in parallel). In general, the service modules invocations may be viewed as forming a tree/hierarchy. The features of the present invention are applicable to such hierarchical invocations as well, as will be apparent to one skilled in the relevant arts by reading the disclosure provided herein.

Referring again to Figure 3A, batch module 227 may receive an indication (along path 320) from schedule 240 that a corresponding batch is to be processed, and in response invoke a service module (such as 231) as part of the batch processing (path 325). Service module 231 may then invoke other service modules (such as 232) and/or DAO modules (such as 251) as part of performance of the batch processing. The other service modules (such as 232 and 233) may also invoke other DAO modules (such as 252 and 253). The service modules 231-233 may operate together to generate the results of the batch processing, which may then be stored in a persistent storage (such as database 290) for later retrieval. Thus, batch processing is performed by application 200 according to the prior approach of Figure 3A.

It may be observed that the same DAO module is being used to access data sets during both transaction and batch processing. This may not be desirable, as the data sets accessed during transaction processing is generally located randomly (e.g., at different rows) in tables 292 and 294, while the data sets accessed during batch processing are located sequentially (e.g., in consecutive rows) that can be stored/retrieved together. Thus, usage of a DAO module designed to efficiently access random data sets may cause substantial overhead during batch processing and vice versa, thereby reducing the efficiency of one of transaction/batch processing.

For example, in a common implementation, DAO modules 251-253 are designed to retrieve only the specific data sets required for/relevant to performing a transaction during OLTP (that is, the DAO modules are implemented for efficient transaction processing). The DAO modules are not implemented to take advantage of sequential data access (for which the batch data is pre-sorted) during batch processing. Accordingly, during batch processing as well, data is accessed randomly and in piece meal, causing a larger number of databases accesses (to database 290) to be performed. Such large number of accesses may result in suboptimal performance during batch processing. Furthermore, such an approach results in the transaction boundary being wide, thereby increasing database locks (which is generally not desirable).

To overcome some of the disadvantages of the prior approach of Figure 3A, the functionality of the common DAO modules may be split and implemented as two different DAO modules, a transaction specific DAO module optimized for random access and used/executed during transaction processing and a batch specific DAO module optimized for sequential access and used during batch processing.

However, in practice, the inventors have observed that such mere splitting of the functionality is not sufficient as the transaction/batch specific modules behave similarly to the prior approach of Figure of 3A, and additional software/design support (frameworks) need to be provided to make such an implementation efficient. One such software support is described below with examples.

Figure 3B depicts a prior approach in which IBM Compute Grid available from IBM Corporation provides software support for implementing transaction and batch specific DAO modules. The description is continued assuming that DAO modules 251-253 are implemented for efficient transaction processing and accordingly provide transaction specific access of data.

During transaction processing, wrapper module 350 receives an indication from web page 215 (via a controller module, not shown, on path 370) to start processing of a transaction (containing a sequence of business operations) and in response retrieves the data sets required for the first business operation in the sequence using the various DAO modules 251-253 (as indicated by path 375). Wrapper module 350 then invokes a service module corresponding to the first business operation (for example, 231 via path 378) and passes (for example, as a parameter) the retrieved data to the service module.

The invoked service module 231 receives and accepts all the retrieved data and performs the appropriate computations (according to the business operation implemented) based on the retrieved data. The performance of the computations may cause the retrieved data to be modified. Wrapper module 350 may receive the modified data and then change the data values in database 290 to reflect the changes made to the retrieved data (for example, using DAO modules 251-253 via path 375). Wrapper module 350 may then retrieve the data for other business operations, invoke corresponding service modules (such and 232 and 233 via path 378) and persist the changes to the database.

During batch processing, wrapper module 360 receives an indication to start processing of a batch from scheduler 240 (path 380) and retrieves the data required for each job step (which may represent part or whole of a business operation or unit of work) by invoking bulk data reader 390 (via path 385) that is optimized for sequential retrieval of data. Wrapper module 360 then invokes the corresponding service modules (such as 231-233) for performing the job step. After receiving the modified data from the service modules, wrapper module 355 updates the underlying database 290 using the bulk data writer 395 that is optimized for sequential storage of data.

Wrapper module 355 may similarly perform the retrieval and update of data corresponding to the multiple job steps (forming a single or multiple units of work) performed during the batch processing. The updates made to the database 290 may include the results of batch processing, which may be later accessed by users/administrators using appropriate user interfaces/web pages provided by application 200.

Thus, the approach of Figure 3B provides different modules (DAO vs bulk data reader/writer) for accessing the data during transaction and batch processing, thereby overcoming some of the disadvantages of Figure 3A noted above. However, the approach of Figure 3B also has several disadvantages as described in detail below.

For example, the architecture of Figure 3B necessitates service modules 231-233 to be invoked by the wrapper modules (350/360), and does not allow for the different service modules to interact with (invoke) each other. The approach of Figure 3B also does not allow the service modules implemented in the business logic tier to interact directly with the DAO modules implemented in the data access tier. Such restrictions on the design of the business logic tier are generally not desirable. Embodiments of the invention solve this problem.

Furthermore, as per the approach of Figure 3B, the specification of the sequence of service modules to be invoked (by the wrapper modules) as part of a job step/batch is based on a static configuration, typically in the form of an XML configuration file. The underlying software support/framework (IBM Compute Grid) is designed to read the XML configuration file and cause invocation of the sequence of service modules/job steps specified in the XML file for the particular batch (sought to be executed). It may be appreciated that such static configuration may not be suitable for implementing specific service interactions in batches, such as where some of the child/later service modules in the sequence are required to be invoked only on satisfaction of corresponding business conditions. The static configuration of the approach of Figure 3B may not provide the ability to implement such conditional invocation scenarios. Embodiments of the invention solve this problem.

It may be appreciated that during execution of a unit of work (or job steps), some of the service methods may modify the data loaded into memory (by the wrapper modules 350/360. As such, it may be desirable that the data modifications made by a first service module be made available to all (or at least some of the) subsequent service modules executed during the performance of the job step/unit of work. The approach of Figure 3B does not provide any clear implementations for making available the data modifications between the various service modules. In particular, as the wrapper modules are designed to retrieve the data for each job step, making available data modifications between job steps may necessitate additional accesses to the underlying database. Embodiments of the invention solve this problem.

Thus, there is a general need to make batch processing more efficient in multi-tier applications while overcoming some of disadvantages noted above with respect to the prior approaches of Figures 3A and 3B. In particular, it is desirable that accesses made to persistent storage (e.g., database 290) be made more efficient, while ensuring that both batch and online transaction processing use a common business logic (i.e., use the same service modules), implementation of the efficient batch processing is done without affecting the business logic tier (i.e., without changes required to the service modules as would be required for the approach of Figure 3B), and that the data access tier is highly maintainable (i.e., no changes required for unrelated service modules).

**6. Exemplary embodiments of the present invention**

Figure 4 is a block diagram illustrating the manner in which a multi-tier application 400 is implemented according to several aspects of the present invention. Multi-tier application 400 represents application 200 modified according to several aspects of the present invention. Multi-tier application 400 is shown containing view layer 410, controller layer 420 and model layer 460. Model layer 460, in turn, is shown containing service modules representing the business logic tier and DAO/B-DAO modules representing the data access tier.

View layer 410 and controller layer 420 are similar to view layer 210 and controller layer 220 of application 200 and accordingly the same web pages (215-218) and controller modules 225-226 are shown in the corresponding layers. It may be appreciated that the provision of the same web pages and controller modules indicates that user interactions and correspondingly the transactions are the same for both application 200 as well as application 400.

Model layer 460 (similar to model layer 260) is shown containing the same service modules 231-233, and OLTP specific DAO modules 251-253 as described above with respect to Figure 2. The similar service and transaction specific DAO modules (shown operating based on ORM framework 280) indicates that application 400 performs transaction processing similar to the manner described above with respect to Figures 2 and 3A, and accordingly the description of such transaction processing by application 400 is not described here again for conciseness.

Batch module 430 (similar to batch module 227 of Figure 2) represents a module designed and controlled to start processing of a corresponding batch (as specified by the developer and administrator of the application). However, batch module 430 is also designed to operate with BDM framework 450 to facilitate several features of the present invention, as described below with respect to Figure 6.

Each of batch DAO (B-DAO) modules 461-463 represents a module designed and controlled to provide access to batch specific sequential data sets. B-DAO modules 461-463 are designed to operate with batch data management (BDM) framework 450 (described in detail below), for accessing the data sets in database 290. In particular, B-DAO modules 461-463 are designed to send all the access requests for storing/retrieving data to BDM framework 450, instead of database 290.

It may be observed that service modules 231-233 are shared for both transaction and batch processing, while having separate DAO modules for each of transaction and batch processing. Typically, application 400 determines the mode of operation (OLTP mode or batch mode) based on the invocation of the service modules, for example, based on whether the service modules are invoked by controller module 225/226 or batch module 257. The appropriate instance of DAO/B-DAO module, based on whether the applications is in OLTP or batch mode, may then be instantiated using factory pattern (well known in Java like environments) and provided to service layer, thereby facilitating the service modules to access the appropriate DAO modules.

Alternatively, an application container (such as, Spring Framework) in whose context application 400 is executing, injects the appropriate DAO/B-DAO module into service module based on whether Batch or OLTP mode. In one embodiment, each of the DAO module and the corresponding B-DAO module implements a common IDAO interface, thereby enabling the service modules to access either of the DAO/B-DAO modules based on the mode of operation of application 400.

Batch Data Management (BDM) framework 450, provided according to an aspect of the present invention, facilitates efficient batch processing in application 400, while overcoming some of the disadvantages of the prior approaches noted above. BDM framework 450 is shown external to application 400 as several features of the framework may be shared by multiple applications. However, some of the features are specific to application 400, as described in below sections. The manner in which BDM framework 450 facilitates efficient batch processing in multi-tier applications is described below with examples.

**6.1 Facilitating Efficient Batch Processing in Multi-tier Applications**

Figure 5 is a flowchart illustrating the manner in which efficient batch processing in a multi-tier application is facilitated in one embodiment. The flowchart is described with respect to Figure 4 merely for illustration. However, various features can be implemented in other environments also without departing from the scope and spirit of various aspects of the present invention, as will be apparent to one skilled in the relevant arts by reading the disclosure provided herein.

In addition, some of the steps may be performed in a different sequence than that depicted below, as suited in the specific environment, as will be apparent to one skilled in the relevant arts. Many of such implementations are contemplated to be covered by several aspects of the present invention. The flow chart begins in step 501, in which control immediately passes to step 510.

In step 510, BDM framework 450 provides a (in-memory) data structure specific to a batch (containing a sequence of business operations) such that all the data items required for performing a unit of work of the batch can be maintained. As noted in the Background section, a unit of work represents the processing of a "logical record", and the processing of a batch typically entails execution of multiple units of work (for processing multiple logical records). The in-memory data structure may accordingly be designed to maintain all the data items forming a single "logical record". Thus, while processing a batch, multiple instances of the data structure may be created (corresponding to multiple logical records/units of work) as described in detail below.

In general, the data structure is specific to each batch (whether for the same application or different applications), based on the logical record sought to be processed. For example, for a payroll application, the data structure provided may enable the details of employee records to be maintained, while for an online auction application, the data structure provided may enable the details of product records to be maintained. Accordingly, the definition of the data structure may be provided by the specific batch/application, with BDM framework 450 facilitating the provision of such data structure in-memory and also enabling the modules of the application to access the in-memory data structure.

It may be appreciated that the term "data structure" refers to a template according to which the data items are to be stored in-memory. The term "batch data set" includes both the data structure and the actual values loaded into the data structure. Thus, data structure may be equated to an object type/class, while batch data set may be equated to an object/instance in the object oriented programming paradigm. The data structure may include multiple data items, with each data item having a corresponding object type/class (and accordingly, may have other data items). Thus, the data structure provided by BDM framework 450 may be in the form of a hierarchy of object types required for processing a unit of work of a specific batch.

The term "in-memory" indicates that the data structure is provided in a volatile storage/ memory such as RAM, whose contents are typically lost if the power to the system (hosting BDM framework 450) is cut off. However, such volatile storages generally provide faster accesses to the data maintained there, in comparison to non-volatile/persistent storages such as database server 180 (in which database 290 is maintained). Accordingly, providing the data structure in-memory facilitates efficient batch processing.

In step 530, BDM framework 450 loads the set of data items from a database (such as 290) into the data structure in response to an indication that the corresponding batch is to be performed. The indication may be received from scheduler 240 when (or just before) the processing of the batch is to be started.

The loading of the data items into the data structure may entail creating a number of objects/instances of the object types corresponding to the data items (and the hierarchy), the number of objects corresponding to the number of rows that are sought to be loaded from the tables (292/294) in database 290, and then setting the attribute values of the newly created objects to the data values retrieved from the corresponding columns (based on the attributes) of the rows in the tables. Thus, the data structure after being loaded with the data values retrieved from the database represents a batch data set that contains all the data required for performing a unit of work (that is, completing the performance of all of the sequence of business operations once).

In one embodiment, the retrieval (from database 290) of the data values to be loaded is performed within application 400, with the retrieved values then provided to BDM framework 450 for loading into the data structure. Alternatively, BDM framework 450 may be designed to retrieve and load the data values directly from database 290.

Furthermore, multiple instances of the data structure corresponding to different units of work may be loaded into memory in response to the batch indication, each instance corresponding to a batch data set on which the sequence of operations constituting the specific batch is to be performed. The loading of multiple data sets together further facilitates efficient access of data from database 290.

In step 540, BDM framework 450 receives requests directed to the data items (loaded into the data structure provided according to an aspect of the present invention), including a change request followed by a query request. The requests may be received from B-DAO modules 461-463 implemented in the data access tier of application 400.

In one embodiment, BDM framework 450 provides the in-memory data structure as an object that is accessible by the modules in application 400, with the various types of requests provided as methods/subroutines of the object. A (B-DAO) module may send a request by invoking the appropriate method in the object. In the scenario that multiple instances of the data structure are loaded into memory, a (B-DAO) module first requests BDM framework 450 to provide the currently active object/data structure (corresponding to the current unit of work being performed), receives the active object from BDM framework 450 and then invokes the appropriate method of the active object.

The requests may indicate the desired database operations/commands such as INSERT, DELETE, UPDATE, SELECT, etc. (according to SQL well known in relational database environments) to be performed on the data items maintained in the data structure. Some of the requests (those indicating commands such as INSERT, DELETE, UPDATE) may cause the values of the data items in the data structure to be modified/manipulated and are referred to as "change requests", while other requests (those indicating commands such as SELECT) may cause only retrieval of data and are referred to as "query requests". The above noted change request and query request may be received from the same/different B-DAO modules in application 400.

In step 560, BDM framework 450 processes the requests based on the data items maintained in the data structure and sends corresponding results of processing (to the requesting modules of application 400). The processing of the requests may entail performing the database operations/commands on the data items. For example, the database command INSERT may entail adding a new data item/attributes (having corresponding values) in the data structure, while the database command UPDATE may entail changing the attribute values of some of the data items/attributes to new values specified in the request. In general, processing of change requests causes the data items in the data structure to be modified, while query requests do not affect the data structure.

It may be appreciated that query requests for retrieving the data items need to be performed on the modified data structure (incorporating the changes indicated by the previously received change requests). Thus, BDM framework 450 ensures that the processing of the query request received in step 540 is performed only after the processing of the change request received before the query request, thereby ensuring that the data items sent as the result of processing of the query request is accurate.

In the embodiment where the data structure is provided as an object having methods corresponding to various requests, the programming logic for performing the various database operations on the object/data structure is also provided within the object. Thus, invocation of various methods ensures that the object/data structure is maintained consistent with the change requests and that the results of processing query requests are based on the modified object/data structure.

In general, the changes made to the data structure during processing of a request are made available to subsequent requests, thereby ensuring that the subsequent requests are processed based on the modified data structure. It should be noted, that the changes made to the data structure are not persisted to a secondary storage (such as database 290) during the performance of the unit of work (for processing a single record). The changes are persisted only after the completion of the unit of work as described below.

In step 580, BDM framework 450 persists the changes made to the data structure to the database (such as 290) to ensure that the changes are reflected in the database. The persistence of changes may be performed at any pre-configured instance during the batch processing. For example, after the completion of a unit of work, the changes made to the corresponding data structure may be persisted. Alternatively, in the scenario that multiple instances of the data structure (corresponding to multiple units of work) are loaded into memory, the changes to the data structures may be persisted together only after all/some of the multiple units of work are completed. It should be noted that the changes are persisted only after one or more units of work are completed and not during the performance of a unit of work (that is, while processing requests in step 560).

In one embodiment, SQL statements (as understood by database 290) corresponding to the various change requests are generated as part of processing of the requests (in step 560). The SQL statements generated during the processing of a unit of work are maintained in a buffer. It should be noted that no SQL statements need to be generated for query requests as they do not change the data structure.

On completion of the unit of work, the SQL statements in the buffer are sent to database 290 for execution. The execution of the SQL statements in database 290 ensures that the changes made to the data structure are persisted. In other words, the rows/columns and corresponding values in database 290 are made consistent with the data items/attributes and corresponding attribute values currently maintained in the in-memory data structure. The flow chart ends in step 599.

Thus, BDM framework 450, by providing an in-memory data structure for performing a batch (unit of work) and then persisting changes at the completion of the unit of work facilitates efficient batch processing in multi-tier application (400). The manner in which BDM framework 450 may be implemented to provide several aspects of the present invention is described below with examples.

**6.2 Example Implementation**

Figure 6 is a block diagram illustrating the manner in which a batch data management (BDM) framework providing several aspects of the present invention is implemented in one embodiment. The operation of BDM framework 450 is described below with respect to the modules present in Figures 2 and 4, and accordingly the description of such modules is not repeated again for conciseness. Furthermore, efficient OLTP processing in multi-tier application (400) may be performed as described above with respect to Figures 2 and 3A and accordingly only the modules that are related to batch processing are shown in Figure 6.

Batch module 430 in response to receiving an indication (path 605) from scheduler 240 that a specific batch (hereafter referred to as the "current batch") is to be processed, retrieves the data sets required for the processing of the current batch. Batch module 430, may accordingly invoke B-DAO module 620 (which directly accesses database 290 using technologies such as JDBC noted above) for retrieving the sequential data sets required for the processing of the current batch.

In one embodiment, B-DAO module 620 retrieves (via path 625) the data sets required for performance of multiple units of work (for example, multiple employee/ product records). Since multiple data sets are retrieved in one access, B-DAO module 620 may be designed to optimize the access requests (for example, the SQL statements) to be sent to database 290 for retrieving the required data sets, thereby making batch processing more efficient.

Batch module 430 may then send the retrieved data sets (via path 635) to BDM framework 450 for loading as in-memory data structures. It should be noted that the retrieved data/data sets are generally in a form (such as an array, hash map, etc.) which is not readily accessible by the various B-DAO modules.

BDM framework 450, provided according to several aspects of the present invention, facilitates efficient batch processing in application 400. BDM framework 450 is shown containing loader 630, cache 640 (in turn shown containing batch value objects (VOs) 651-653), cache manager 670 and SQL buffer 690. Each of the blocks in described in detail below.

Cache 640 represents a portion of a volatile memory in which BDM framework 450 provides in-memory data structures (batch VOs described below) in a form easily accessible by B-DAO modules of multi-tier application 400. It may be appreciated that the term "cache" indicates that the data maintained in the volatile memory is a copy of the data stored in database 290. It may be further appreciated that unlike regular caches, there are no cache misses (where a requested data is not available in the volatile memory) since all the data items required for performing a unit of work of the current batch are pre-loaded into cache 640.

Batch value object (VO) 651 represents a batch data set containing all the data items required for processing a single record of the current batch, i.e., for performing a single unit of work. Thus, batch VO 651 contains a hierarchy of data items that have been set to the data values loaded from the tables (292/294) in database 290. Batch VO 651 is shown provided in cache 640 by BDM framework 450, thereby enabling modules of application 400 to easily access the batch data set. The manner in which batch VO 651 may be implemented is described below with examples.

Figure 7 depicts the manner in which a data structure for maintaining all the data items required for processing a batch is implemented a multi-tiered application in one embodiment. The description is continued assuming that the service modules (231-233) in the business logic tier of application (400) require only the B-DAO modules 461-463 for processing the current batch.

Thus, XDAO interface 710 represents a definition of the structure/template of B-DAO module 461. As is well known in Java programming environments, an interface defines the signatures (indicating the names, the number/type of parameters, the return type, etc.) of the methods that have to be implemented by any object type/class implementing the interface. Thus, XDAO interface 710 indicates the methods updateX(), findX(), and deleteX() have been implemented by B-DAO module 461. Similarly YDAO interface 720 and ZDAO interface 730 defines the methods that have been respectively implemented by B-DAO modules 462 and 463.

Batch VO class 750 depicts the definition of a data structure in which all the data items required for processing the current batch (multiple units of work) can be maintained. Batch VO class 750 is shown as implementing (as indicated by the dotted lines) all the interfaces of the B-DAO modules that are required for processing the current batch. Thus, batch VO class 750 is shown as implementing all the methods of XDAO interface 710, YDAO interface 720 and ZDAO interface 730.

Batch VO class 750 is also shown containing data items X1, Y1 and Z1 of respective object types/classes X, Y and Z to facilitate maintaining the data items required for processing of the current batch. Though individual instances of each of the data items is shown as being maintained in the batch VO class, it may be appreciated that in the scenario where the data items form one or more hierarchies of object types (for example, a single hierarchy where Y contains X, which in turn contains Z), only instances of the object types at the root of the hierarchies (Y in the above noted example) may be included in the batch VO class 750. In general, batch VO class (data structure) 750 is defined to include any number/type of individual/hierarchical data items required for processing the current batch.

Referring back to Figure 6, batch VO 651 represents an instance of batch VO class 750 in which all the data items/data values have been set/loaded. Batch VOs 652 and 653 represents other instances of batch VO class 750 in which different data items/values (corresponding to other rows in tables 292/294) have been loaded. Batch VOs 652 and 653 accordingly represents batch data sets required for performance of other units of work of the current batch that have been provided in-memory (cache 640) by BDM framework 450.

Though only the multiple instances of a single data structure specific to the current batch are shown as being provided in cache 640, it may be appreciated that in a typical multi-tier application, instances of different batches (currently being processed simultaneously or in parallel) may be provided in cache 640. BDM framework 450 may accordingly be designed to determine which of the specific batch data sets to be provided. For example, the usage of thread local objects (described in detail below) implicitly ensures that the correct batch data set is provided.

Loader 630 receives (via path 635) the data sets to be loaded from batch module 430, and then loads a data structure specific to the current batch being processed, that is, batch VO(s). As noted above, loading may entail creating a number of objects/instances corresponding to the data items and then setting the attribute values of the newly created objects to the data values received from batch module 430. In the above noted example, loader 630 first creates an instance batch VO 651 of batch VO class 750, and also the data items X1, Y1 and Z1 (which may be created automatically when creating instance batch VO 651), and then sets the attribute values of the attributes of the instances to data values received from batch module 430.

Cache manager 670 represents a software module that is designed and controlled to receive requests (via path 660) from B-DAO modules 461-463 for the currently active instance/batch VO (corresponding to the unit of work currently being performed), identifies the current batch VO and then sends as corresponding responses (via path 660) data indicating the currently active instance/batch VO. The currently active instance is indicated by batch module 430. In general, batch module 430 after loading a set of instances indicates a first instance in the set as the current active instance and invokes a specific set of service modules corresponding to the sequence of business operations (thereby causing the processing of the current active instance). After processing of the first instance is completed, batch module 430 indicates the next instance in the set as the current active instance and again invokes the specific set of service modules. The above steps are repeated until all of the loaded set of instances is processed completely. The description is continued assuming that batch VO 651 has been indicated (by batch module 430) as the currently active batch VO and thus is provided by cache manager 670 to B-DAO modules 461-463.

Each of B-DAO modules 461-463 may then invoke (path 665) any of the desired methods (shown in 750 of Figure 7) provided in batch VO 651. It may be appreciated that the invoking of the methods corresponds to receiving (by BDM framework 450) of the requests directed to data items in step 540. Thus, invocation of methods having the texts such as "update", "delete", "save", and "add" may be viewed as receiving change requests, while invocation of methods having the texts such as "find" and "get" may be viewed as receiving query requests.

In response to the requests, batch VO 651 process the received requests based on the corresponding programming logic already provided in the methods (as indicated by batch VO class 750). In particular, batch VO 651 may add/delete/change the data items/attributes/attribute values of X1, Y1 and Z1 based on the database operations specified in the received requests. Batch VO 651 may then send the results (path 665) of processing of the requests as corresponding responses to the requesting B-DAO modules. Thus by providing the currently active batch VO to the B-DAO modules, BDM framework 450 facilitates the processing of the received requests based on data items maintained in the in-memory data structure (batch VO).

B-DAO modules 461-463 receive the results of processing of the requests and then forward them to service modules 231-233. In the scenario of a query request, no further action is performed by the B-DAO modules. However, for a change request, the requesting B-DAO module determines whether the change request was processed successfully based on the received result (for example, based on a status indicator received as part of the result). In other words, the requesting B-DAO module determines whether the in-memory data structure provided by BDM framework 450 has been successfully modified consistent with the change request.

In the scenario that the change request is determined to have been successfully processed (i.e., the data structure has been changed consistent with the request), the requesting B-DAO module generates a SQL statement corresponding to the change request and then registers the SQL statement with BDM framework 450 by sending a corresponding register request to cache manager 670 (path 660).

Cache manager 670 on receives the register request (containing the generated SQL statement) stores the SQL statement in SQL buffer 690. Cache manager 670 may similarly store other SQL statements in SQL buffer 690 in response to receiving other register requests from B-DAO modules of application 400. In the scenario that multiple instances of batch VO are loaded in cache 640, cache manager 670 may also maintain data indicating which of the SQL statements are associated with which of the data sets (batch VOs) loaded in cache 640.

SQL buffer 690 represents a portion of a memory/storage (typically a combination of volatile memory such as RAM and non-volatile memory such as a hard disk) which maintains an ordered list of SQL statements corresponding to each data set (batch VO) registered with BDM framework 450 (by B-DAO modules of application 400). The list of SQL statements are ordered based on the time of processing the request, such that the list reflects the complete set of changes effected to the data set (batch VO) after being loaded from the database 290. It may be appreciated that the performance of the list of SQL statements corresponding to a data set (in the ascending order of time) in database 290 will cause the data in database 290 to be made consistent with the changes effected to the data set (batch VO).

Batch module 430, accordingly, on determining that a unit of work has been successfully completed (based on a status received from service module 231), first retrieves (by sending a corresponding request to cache manager 670 via path 635) the ordered list of SQL statements associated with the data set processed during the performance of the unit of work. Batch module 430 then executes the ordered list of SQL statements in database 290 (using B-DAO module 620) to ensure that the changes made to the data structure (batch VO) is persisted to the database (step 580).

In one embodiment, the ordered list of SQL statements (collected during the performance of a unit of work) is executed as a database transaction. Thus, on determination that a unit of work has been successfully completed, a database transaction is started, the ordered list of SQL statements executed and the transaction then committed (or rolled back if the execution of any of the SQL statement was not completed). Such an approach ensures that the database transaction boundary (the period between the start and end of the database transaction) is kept relatively small. It should be noted that in alternative embodiments, the execution of the SQL statements may be performed after successful completion of multiple units of work (however, not during the performance of a unit of work, to ensure that each logical record is completely processed).

It may be appreciated that the above description of the operation of BDM framework 450 is relevant when batch processing is performed using a single thread of execution. However, the features of the present invention may be implemented in multi-threaded applications as well as described in detail below.

**6.3 Multi-threaded Application**

In a multi-threaded application, batch module 430 first retrieves (using B-DAO module 620) only the identifiers uniquely identifying the data sets required for performing some (or even all) of units of work of the current batch. Batch module 430 then stores the retrieved identifiers in a message queue.

A first thread may then fetch (and also remove) some of the identifiers from the message queue, retrieve a first group of data sets identified by the fetched identifiers using B-DAO module 620, and then load the data sets into cache 640 as corresponding instances of the data structure (batch VOs). The first thread may then process the first group of batch VOs in a sequential manner, with the active instance used to keep track of the currently accessed data set (batch VO). The first thread may also retrieve (from cache manager 670) the SQL statements at the end of each unit of work and execute the SQL statements (using B-DAO 620, and as a database transaction) in database 290.

A second thread (executing simultaneously with the first thread) may similarly fetch (and remove) another set of identifiers from the message queue, retrieve and load a second group of data sets identified by the another set of identifiers into cache 640, perform each of the units of work thereby causing the corresponding data set in the second group to be modified, and also retrieve and execute the SQL statements at the end of each unit of work.

It may be appreciated that the above described approach of batch module 430 first populating a message queue with the identifiers of the data sets and then loading some of the data sets (based on the identifiers in the message queue) may also be implemented in the single threaded implementation described in the previous section. For example, after populating the message queue, a single execution thread may iteratively (in a sequential manner) fetch/ remove sets of identifiers from the message queue and process the data sets identified by the fetched identifiers.

Cache manager 670 is implemented to keep track of the different groups of data sets currently being processed by each thread. In one embodiment, cache manager 670 is implemented as a singleton class (that is having only one instance/object at any point of time) which maintains the groups of data sets corresponding to each thread as thread local objects. Cache manager 670 then provides the thread specific data to each requesting thread. As is well known, a thread local object represents data that is local to a thread, where only the thread is allowed to access the data. In other words, the use of thread local objects ensures that the changes made by one thread (to a first group of data sets) are not visible to other threads (operating with other groups of data sets). Accordingly, synchronizing of access of data by multiple threads to the data maintained in cache 640 may be avoided, thereby improving the efficiency of batch processing in multi-threaded applications.

It may be appreciated that BDM framework 450 facilitates efficient batch processing in multi-tier application 400 (having a single thread or multiple threads). In particular, accessing of data (from a persistent storage such as database 290) for processing a batch is made more efficient in terms of time taken to retrieve the data (only when the batch VOs are loaded), the number of queries performed for update (only when the SQL statements are performed together at the end of processing of each unit of work), and the specific manner in which the data for a batch is retrieved/stored (the time during which the data is locked during access is kept to a minimum, as loading is done initially).

BDM framework 450 achieves the above efficiency while overcoming some of the disadvantages noted above with respect to the prior approaches of Figures 3A and 3B. For example, the usage of different modules optimized for transaction and batch processing ensures batch DAO do sequential data access and update in bulk for multiple units of work thereby overcoming the disadvantage of the prior approach of Figure 3A noted above.

With respect to the prior approach of Figure 3B, it may be observed that the present invention requires only changes to the B-DAO modules in the multi-tier application. There are no changes that need to be implemented in the service modules of the business logic tier. Also, the requirement of having each DAO module and the corresponding B-DAO module implementing a common IDAO interface ensures that the service modules can be used without any changes. The present invention further facilitates the service modules to interact (invoke) each other (including conditionally), and also to interact with the DAO modules in the data access tier, in contrast to the prior approach of Figure 3B.

Furthermore, it may be appreciated that the usage of a current active instance/batch data set that is provided in-memory to all the service modules, any data modifications made by one of the service modules is also made available to the child/later service modules invoked during the execution of the unit of work. The usage of thread local objects in a multi-thread application also facilitates the same active instance/batch data (corresponding to each thread) to be provided to all the service methods invoked in a single thread for each unit of work.

Thus, BDM framework 450, provided according to several aspects of the present invention, facilitates efficient batch processing in multi-tier application 400, while overcoming some of the disadvantages of the prior approaches. The manner in which the features of the present invention may be implemented in a multi-tier application is described below examples.

**6.4 Example Multi-tier Application**

Figures 8-11 together illustrate the manner in which the features of the present invention are implemented in an exemplary multi-tier application (Online Auction application) in one embodiment. The various methods indicated in the Figures are shown in the format "method name(method parameters) : method return type". In addition, conditions based on which methods are invoked are shown in square brackets []. Each of the Figures is described in detail below.

Broadly, the multi-tiered Online Auction application facilitates users/sellers to offers products for sale (sometimes for only a period specified by the users) and enables other users/bidders to specify bids/prices for the offered products. The Online Auction application also identifies after a pre-defined or user-specified period when bidding is closed, a winning bidder (for example, the user who specifies the highest bid/price) for each product based on the corresponding bids received and then ships/sends the product to the address of the winning bidder. The details of the products, users and bids may be maintained in persistent storage such as database 290.

It may be appreciated that the Online Auction application may be implemented to support processing of transactions such as facilitating a user to offer desired products for sale, user selection of a desire product for specifying bids, specification of the bids for the products, etc. The business logic underlying these transactions may be implemented as service modules in a business logic tier of the Online Auction application, and the corresponding instructions for accessing data (products, users, bids, etc.) in database 290 may be implemented as DAO modules in a data access logic tier of the application. The service and DAO modules maybe implemented consistent with the approach noted above with respect to Figures 2 and 3A to facilitate efficient processing of the transactions.

The Online Auction application may also need to support batch processing. For example, it may be required that an auction post-processing batch be performed at the end of each business day, wherein for each product for which bidding is closed, the following business operations are performed: (a) find the winning bidder (and the corresponding winning bid/price), (b) calculate final selling price of product, (c) complete payment processing, (d) ship the product to winning bidder, (e) inform unsuccessful bidders by email and (f) delete unsuccessful bids. Each of these six business operations may be implemented using one or more service modules (noted above).

Referring to Figure 8, sequence diagram 800 illustrates the manner in which the calculation of the final selling price (the second business operation) is performed based on various business conditions in one embodiment. Broadly, the details of the product for which the final selling price is to be calculated is fetched (810), the tax to be added to the winning price is calculated based on the address of the winning bidder (820, 825), and the shipping charges to be added to the winning price is calculated by retrieving bidder and seller address (830, 835, 840). In the scenario that the winning bidder/user is of user type "silver" and has an "active" discount coupon, the coupon is retrieved (860) and a corresponding discount is done from the previously calculated price, and the coupon is saved with the status set to "inactive" to ensure that the coupon is not reused (870). In the scenario that the user is of user type "premium", the list of products bought by the user during a previous pre-configured period is retrieved (880) and the previously calculated price is further discounted (based on the number of products bought) to determine the final selling price.

It may be observed that service modules are shown invoking other service modules, which in turn are shown invoking multiple B-DAO modules. The other business operations noted above may be similarly performed by accessing the various B-DAO modules shown in Figure 8. As noted above, the batch VO/data structure used for providing access to the data products required for performing a unit of work (in this scenario, processing the winning bidder for an product record) is formed by implementing the various interfaces corresponding to the B-DAO modules and such an implementation performs various CRUD database operations on the data items maintained in the in-memory batch VO.

Accordingly, in Figure 9, AuctionBatchDataVO class 950 (batch VO/data structure) implemented in the Online Auction application is shown implementing the interfaces 921-924 corresponding the B-DAO modules shown in sequence diagram 800. AuctionBatchDataVO class 950 is a data structure that can maintain all the data items (such as bids, users, etc.) required to perform the above noted six business operations for a single product (unit of work). During batch processing, multiple instances (corresponding to multiple units of work) of AuctionBatchDataVO class 950 may be created and loaded with corresponding data values retrieved from database 290 and the instances may then be made available to the service/B-DAO modules of the Online Auction to facilitate efficient batch processing.

Referring to Figure 10, object hierarchy 1000 depicts the data structure of AuctionBatchDataVO class 950 when loaded with the data values retrieved from database 290 (in other words, a single instance/data set). It may be observed that object hierarchy 1000 contains various data items and attributes (not shown) at different levels, all of which are loaded with the corresponding attribute values (as described above) during loading of the batch VOs into cache 640.

Referring to Figure 11, sequence diagram 1100 illustrates the manner in which a B-DAO module interacts with BDM framework 450 for performing a database operation (here, an update operation). As shown, in response to a change request "save(Coupon)" (step 1120) for updating the status of the coupon to "inactive" (step 870 of Figure 8), BatchCouponDAO module is shown as first sending a request "getCacheData()"for the active instance to ThreadCacheManager (an implementation of cache manager 670) and receives the active instance of AuctionBatchDataVO as the response (path 660). BatchCouponDAO then invokes (1140) save(Coupon) method of AuctionBatchDataVO (path 665) for changing the data structure consistent with the change request (that is, setting the status value of the coupon associated with the winning bidder to "inactive"). BatchCouponDAO also generates and registers (1160) a corresponding SQL statement (shown as the variable "sql") to ThreadCacheManager (thereby enabling the SQL statement to be maintained in SQL buffer 690). BatchCouponDAO then returns the control back to the service module 'AuctionService'.

Thus, the change request save(Coupon) received from the Online Auction application is processed by BDM framework 450. Other change (and also query requests) may be similarly implemented, for example, by changing the method invoked in steps 1120 and 1140. It should be appreciated that step 1160 may not be performed for query requests, or when change requests are not successfully performed.

It should be appreciated that the features described above can be implemented in various embodiments as a desired combination of one or more of hardware, executable modules, and firmware. The description is continued with respect to an embodiment in which various features are operative when executable modules are executed.

**7. Digital Processing System**

Figure 12 is a block diagram illustrating the details of digital processing system 1200 in which various aspects of the present invention are operative by execution of appropriate executable modules of computer program code comprising computer program code portions devised to control a digital data processing system to perform the steps of the invention. Digital processing system 1200 may correspond to any system (such as server system 190A-190B) executing BDM framework 450.

Digital processing system 1200 may contain one or more processors such as a central processing unit (CPU) 1210, random access memory (RAM) 1220, secondary memory 1230, graphics controller 1260, display unit 1270, network interface 1280, and input interface 1290. All the components except display unit 1270 may communicate with each other over communication path 1250, which may contain several buses as is well known in the relevant arts. The components of Figure 12 are described below in further detail.

CPU 1210 may execute instructions stored in RAM 1220 to provide several features of the present invention. CPU 1210 may contain multiple processing units, with each processing unit potentially being designed for a specific task. Alternatively, CPU 1210 may contain only a single general-purpose processing unit.

RAM 1220 may receive instructions from secondary memory 1230 using communication path 1250. RAM 1220 is shown currently containing software instructions constituting operating environment 1225 and/or other user programs 1226 (such as applications, web/application server software, RDBMS, etc.). In addition to operating environment 1225, RAM 1220 may contain other software programs such as device drivers, virtual machines, etc., which provide a (common) run time environment for execution of other/user programs.

Graphics controller 1260 generates display signals (e.g., in RGB format) to display unit 1270 based on data/instructions received from CPU 1210. Display unit 1270 contains a display screen to display the images defined by the display signals. Input interface 1290 may correspond to a keyboard and a pointing device (e.g., touch-pad, mouse) and may be used to provide inputs. Network interface 1280 provides connectivity to a network (e.g., using Internet Protocol), and may be used to communicate with other systems connected to the network.

Secondary memory 1230 may contain hard drive 1235, flash memory 1236, and removable storage drive 1237. Secondary memory 1230 may store the data and software instructions (for example, implementing the flowchart shown in Figure 4), which enable digital processing system 1200 to provide several features in accordance with the present invention.

Some or all of the data and instructions may be provided on removable storage unit 1240, and the data and instructions may be read and provided by removable storage drive 1237 to CPU 1210. Floppy drive, magnetic tape drive, CD-ROM drive, DVD Drive, Flash memory, removable memory chip (PCMCIA Card, EPROM) are examples of such removable storage drive 1237.

Removable storage unit 1240 may be implemented using medium and storage format compatible with removable storage drive 1237 such that removable storage drive 1237 can read the data and instructions. Thus, removable storage unit 1240 includes a computer readable (storage) medium having stored therein computer software and/or data. However, the computer (or machine, in general) readable medium can be in other forms (e.g., non-removable, random access, etc.).

In this document, the term "computer program product" is used to generally refer to a computer program comprising computer program code stored on a data carrier such as a removable storage unit 1240 or hard disk installed in hard drive 1235. These computer program products are means for providing software to digital processing system 1200. CPU 1210 may retrieve the software instructions, and execute the instructions to provide various features of the present invention described above.

Reference throughout this specification to "one embodiment", "an embodiment", or similar language means that a particular feature, structure, or characteristic described in connection with the embodiment is included in at least one embodiment of the present invention. Thus, appearances of the phrases "in one embodiment", "in an embodiment" and similar language throughout this specification may, but do not necessarily, all refer to the same embodiment.

Furthermore, the described features, structures, or characteristics of the invention may be combined in any suitable manner in one or more embodiments. In the above description, numerous specific details are provided such as examples of programming, software modules, user selections, network transactions, database queries, database structures, hardware modules, hardware circuits, hardware chips, etc., to provide a thorough understanding of embodiments of the invention.

## Claims

1. A method of implementing batch processing in a multi-tiered application, said method being performed in a digital processing system, said method comprising:
providing in a memory in said digital processing system, a data structure specific to a batch, wherein said data structure is designed to contain a plurality of data items required for the performance of each of a plurality of units of work comprising said batch;
receiving an indication that a corresponding batch is to be performed;
loading from a database in response to said indication that said batch is to be processed, data values corresponding to said plurality of data items into said data structure to create a first batch data set in said memory, wherein said first batch data set contains all the data required for performance of a first unit of work contained in said plurality of units of work, wherein said database is external to said digital processing system;
receiving during the performance of said first unit of work, a plurality of requests directed to said plurality of data items, wherein said plurality of requests contains a change request followed by a query request, said change request for modifying some of the data values and said query request for retrieving some of the data values;
processing said plurality of requests based on the data values in said first batch data set maintained in said memory, wherein processing of said change request causes said first batch data set to be changed to a modified batch data set, wherein said processing of said query request is performed based on said modified batch data set;
sending the results of processing of said plurality of requests as corresponding responses to the requests; and
persisting said modified first batch data set to said database after the performance of said unit of work is complete.

2. The method of claim 1, wherein said first batch data set is provided in the form of a value object, said value object also containing a plurality of methods corresponding to database operations that can be performed on said plurality of data items,
wherein each of said plurality of requests corresponds to an invocation of one of said plurality of methods,
wherein said processing each of plurality of requests comprises performing the database operation corresponding to the invoked method on the data values in said first batch data set, wherein execution of some of the database operations on the data values causes said first batch data set to be changed to said modified batch data set,
wherein said sending comprises returning each of the results of processing as a corresponding result of said invocation.

3. The method of claim 2, wherein the database operations comprises a create operation, a read operation, an update operation and a delete operation.

4. The method of claim 2, wherein said plurality of requests are received from a set of batch data access object (DAO) modules implemented in a data access tier of said multi-tier application, wherein each of said set of batch DAO modules implements a corresponding set of methods that are invoked from modules implemented in higher tiers of said multi-tier application,
wherein said plurality of methods implemented in said value object comprises all of said set of methods corresponding to said set of batch DAO modules,
whereby all of the database operations requested by said higher tiers of multi-tier application are enabled to be performed on said plurality of data items loaded into said data structure.

5. The method of claim 4, wherein said processing further comprises generating a plurality of standard query language (SQL) statements corresponding to the change requests successfully processed in said plurality of requests,
wherein said persisting further comprises executing said plurality of SQL statements in said database after the processing of said unit of work is completed.

6. The method of claim 5, wherein said executing said plurality of SQL statements is performed as a database transaction.

7. The method of claim 5, further comprising, maintaining said plurality of SQL statements as an ordered list according to ascending order of time for each of said plurality of units of work, wherein said executing executes said plurality of SQL statements according to said ordered list for each of said plurality of units of work.

8. The method of claim 4, wherein said loading further loads data values from said database to create a plurality of batch data sets corresponding to a subset of said plurality of units of work, said plurality of batch data sets including said first batch data set, said method further comprising:
receiving from a first batch DAO module of said set of batch DAO modules, a first request for an active instance whose data items are being processed during the execution of said first unit of work; and
sending a corresponding first response to said first request indicating that said first batch data set is said active instance,
wherein said plurality of requests directed to data items in said first batch data set are received after said first batch data set is indicated as said active instance.

9. The method of 8, wherein said loading loads from said database, data values for creating batch data sets corresponding to all of said plurality of units of work before said receiving receives any of said plurality of requests.

10. The method of claim 8, wherein the processing of said batch is performed using a plurality of threads, each thread performing the processing of a number of units of work requiring a corresponding subset of said plurality of batch data sets,
wherein a first thread requires a first subset of batch data sets and a second thread requires a second subset of batch data sets, said plurality of threads comprising said first thread and second thread and said plurality of batch data sets comprising said first subset of batch data sets and said second subset of batch data sets,
wherein said providing further comprises restricting said first thread to access only said first subset of batch data sets and said second thread to access only said second subset of batch data sets.

11. The method of claim 10, wherein said restricting is performed by defining said first subset of batch data sets as a thread local object of said first thread and said second subset of batch data sets as a thread local object of said second thread.

12. A system for implementing batch processing in a multi-tiered application, comprising:
at least one processor;
at least one memory;
at least one scheduler;
at least one storage device having stored thereon instructions that, when retrieved into said at least one memory and executed by said at least one processor, causes said at least one processor to:
provide in said at least one memory, a data structure specific to a batch, wherein said data structure is designed to contain a plurality of data items required for the performance of each of a plurality of units of work comprising said batch;
receiving from said scheduler an indication that a corresponding batch is to be performed;
load from a database in response to said indication that said batch is to be processed, data values corresponding to said plurality of data items into said data structure to create a first batch data set in said at least one memory, wherein said first batch data set contains all the data required for performance of a first unit of work contained in said plurality of units of work, wherein said database is external to said system;
receive during the performance of said first unit of work, a plurality of requests directed to said plurality of data items, wherein said plurality of requests contains a change request followed by a query request, said change request for modifying some of the data values and said query request for retrieving some of the data values;
process said plurality of requests based on the data values in said first batch data set maintained in said at least one memory, wherein processing of said change request causes said first batch data set to be changed to a modified batch data set, wherein said processing of said query request is performed based on said modified batch data set;
send the results of processing of said plurality of requests as corresponding responses to the requests; and
persist said modified first batch data set to said database after the performance of said unit of work is complete.

13. The system of claim 12, wherein said first batch data set is provided in the form of a value object, said value object also containing a plurality of methods corresponding to database operations that can be performed on said plurality of data items,
wherein each of said plurality of requests corresponds to an invocation of one of said plurality of methods,
wherein said at least one processor processes each of plurality of requests by performing the database operation corresponding to the invoked method on the data values in said first batch data set, wherein execution of some of the database operations on the data values causes said first batch data set to be changed to said modified batch data set,
wherein said at least one processor sends each of the results of processing as a corresponding result of said invocation.

14. The system of claim 12, wherein said at least one processor generates a plurality of standard query language (SQL) statements corresponding to the change requests successfully processed in said plurality of requests,
wherein said at least one processor persists the changes by executing said plurality of SQL statements in said database after the processing of said unit of work is completed.

15. The system of claim 12, wherein said at least one processor processes loads data values from said database to create a plurality of batch data sets corresponding to a subset of said plurality of units of work, said plurality of batch data sets including said first batch data set,
wherein said at least one processor processes said batch using a plurality of threads, each thread performing the processing of a number of units of work requiring a corresponding subset of said plurality of batch data sets,
wherein a first thread requires a first subset of batch data sets and a second thread requires a second subset of batch data sets, said plurality of threads comprising said first thread and second thread and said plurality of batch data sets comprising said first subset of batch data sets and said second subset of batch data sets,
wherein said at least one processor restricts said first thread to access only said first subset of batch data sets and said second thread to access only said second subset of batch data sets.
